# EUROPÄISCHE PATENTSCHRIFT

(11) **EP 4 426 461 B1**
(45) Veröffentlichungstag und Bekanntmachung des Hinweises auf die Patenterteilung: **03.12.2025**
(21) Anmeldenummer: 22813127.2
(22) Anmeldetag: 27.10.2022
(51) Int. Cl.: B01D 29/21, B01D 35/16, B01D 35/30

(54) **FILTERELEMENT, FILTERGEHÄUSETEIL, FILTERSYSTEM, UND VERWENDUNG EINES FILTERELEMENTS IN EINEM FILTERSYSTEM**
FILTER ELEMENT, FILTER HOUSING PART, FILTER SYSTEM, AND USE OF A FILTER ELEMENT IN A FILTER SYSTEM
ÉLÉMENT FILTRANT, PARTIE DE BOÎTIER DE FILTRE, SYSTÈME DE FILTRATION, ET UTILISATION D'UN ÉLÉMENT FILTRANT DANS UN SYSTÈME DE FILTRATION

(30) Priorität: 03.11.2021 DE 102021128604
(43) Veröffentlichungstag der Anmeldung: 11.09.2024
(73) Patentinhaber: MANN+HUMMEL GmbH, 71636 Ludwigsburg (DE)
(72) Erfinder: LINHART, Jochen, 71409 Schwaikheim (DE); PFLÜGER, Frank, 74343 Sachsenheim (DE)
(74) Vertreter: Mann + Hummel Intellectual Property
(86) Internationale Anmeldenummer: PCT/EP2022/080124
(87) Internationale Veröffentlichungsnummer: WO 2023/078787

(56) Entgegenhaltungen:
- WO-A1-2015/173624
- US-A1- 2013 228 504

## Beschreibung

### Technisches Gebiet

Die Erfindung betrifft ein Filterelement für ein Filtersystem, ein Filtergehäuseteil für ein Filtersystem, ein korrespondierendes Filtersystem mit einem solchen Filterelement und einem solchen Filtergehäuseteil und eine Verwendung eines Filterelements in einem solchen Filtersystem.

### Stand der Technik

Filtersysteme mit austauschbaren Filterelementen sind dem Fachmann bekannt. Die Filtersysteme umfassen ein Gehäuse, in welchem ein austauschbares Filterelement angeordnet ist, wobei ein Filtermedium des Filterelements einen das Filterelement durchströmenden Fluidstrom filtert. Das Gehäuse kann wenigstens zwei Gehäuseteile umfassen, welche lösbar miteinander verbunden sind. Die Gehäuseteile bilden im verbundenen Zustand einen Hohlraum aus, in welchem das Filterelement auswechselbar angeordnet ist. Wenigstens eines der Gehäuseteile umfasst wenigstens eine Öffnung. Durch das Freigeben der wenigstens einen Öffnung kann das Fluid im Gehäuse aus dem Gehäuse abgelassen werden.

Ein austauschbares Filterelement weist in der Regel ein Filtermedium auf, welches beispielsweise hohlzylinderförmig ausgestaltet und von einem zu reinigenden Fluid von einer Außenseite zu einer Innenseite durchströmt wird und welches an zwei gegenüber liegenden Enden durch wenigstens zwei Endscheiben abgeschlossen ist. Das Filtermedium kann von einem Mittelrohr von innen gegen den hydraulischen Druck des strömenden Fluids gestützt werden. Wenigstens eine Endscheibe kann wenigstens eine Öffnung aufweisen. Durch das Freigeben der wenigstens einen Öffnung kann das Fluid im Gehäuse aus dem Gehäuse abgelassen werden.

Korrespondierende Verwendungen eines Filterelements in einem solchen Filtersystem sind dem Fachmann ebenfalls bekannt.

US 2020114286 A1 beschreibt eine Filterbaugruppe, umfassend eine Filterelementgehäuseplatte, die zwischen einer Hochdruck- und einer Niederdruckseite der Anordnung positioniert ist, wobei die Filterelementgehäuseplatte mindestens einen Hohlraum aufweist. Mindestens ein austauschbares Filterelement ist innerhalb der Filteranordnung angeordnet, wobei jedes austauschbare Filterelement eine Endkappe mit einer äußeren abgerundeten polygonförmigen Dichtungsfläche aufweist, die an Umfangsflächen eines zugeordneten Hohlraums der Filterelementgehäuseplatte angreift und gegen Umfangsflächen des Hohlraums die Filterelement-Gehäuseplatte abdichtet. Die Gehäuseplatte umfasst mindestens einen Riegel für jedes Filterelement, der in die Endkappe des Filterelements eingreift und daran befestigt ist, um das austauschbare Filterelement in einer vorgegeben Position zu sichern.

DE 202015000633 U1 beschreibt eine Filterpatrone, umfassend ein Filtermedium mit einem ersten und einem zweiten Ende, eine mit dem ersten Ende des Filtermediums gekoppelte erste Endplatte, und eine mit dem zweiten Ende des Filtermediums gekoppelte zweite Endplatte. Die zweite Endplatte weist mindestens eine an einer äußeren Umfangsfläche der zweiten Endplatte ausgebildete Lasche auf. Die mindestens eine Lasche umfasst mindestens eine sich von ihr aus erstreckende Laschenrippe. Die mindestens eine Laschenrippe ist für den optionalen Eingriff mit einem zugehörigen Filtermantel angeordnet. Die bzw. jede Lasche definiert eine Tasche, welche bei in dem Filtermantel eingebauter Filterpatrone von einem Benutzer ergreifbar ist.

EP 3666363 A1 offenbart ein Fluidfilterelement. Das Fluidfilterelement umfasst ein Filtermedium, welches in einer zylindrischen Anordnung um eine Längsachse angeordnet ist. Das Fluidfilterelement umfasst weiter eine erste und eine zweite Endscheibe, die an gegenüberliegenden zylindrischen Enden des Filtermediums angeordnet und mit diesem abgedichtet sind, wobei die zweite Endscheibe einen Auslass für gefiltertes Fluid definiert. Das Fluidfilterelement umfasst weiter mindestens einen an der zweiten Endscheibe angeordneten Verriegelungsvorsprung zum drehbaren Verriegeln des Fluidfilters an dem Filterträger durch Drehung des Fluidfilterelements um die Längsachse in einer ersten Drehrichtung relativ zu dem Filterträger. Das Fluidfilterelement umfasst zudem mindestens einen lösbaren Halter, der an der zweiten Endscheibe angeordnet und dem mindestens einen Verriegelungsvorsprung zugeordnet ist, um den mindestens einen Verriegelungsvorsprung in Verriegelungseingriff mit dem Filterträger zu halten, und der, wenn er gelöst ist, ein drehbares Entriegeln des Fluidfilterelements von dem Filterträger durch Drehen des Fluidfilterelements um die Längsachse in einer zweiten Drehrichtung relativ zu dem Filterträger entgegengesetzt zur ersten Drehrichtung ermöglicht.

Aus WO 2015/173624 A1 ist ein Filterelement mit einem Hakenkörper bekannt, der eine profilierte Oberfläche aufweist und mit einem entsprechenden Stützkörper im Filtergehäuse zusammenwirkt.

### Offenbarung der Erfindung

Eine Aufgabe der Erfindung ist es, ein Filterelement eines Filtersystems zu schaffen, welches zuverlässig in einem Verwendungszustand an einem Filtergehäuseteil fixierbar ist.

Eine weitere Aufgabe der Erfindung ist es, ein Filtergehäuseteil eines Filtersystems zu schaffen, an welchem ein Filterelement in einem Verwendungszustand zuverlässig fixierbar ist.

Eine weitere Aufgabe der Erfindung ist es, ein Filtersystem zu schaffen, welches ein Filterelement und ein Filtergehäuseteil umfasst, wobei das Filterelement durch eine Befestigungsanordnung in einem Verwendungszustand zuverlässig am Filtergehäuseteil fixiert ist.

Eine weitere Aufgabe der Erfindung ist es, eine Verwendung eines Filterelements in einem Filtersystem anzugeben, welche einfach umgesetzt werden kann.

Die vorgenannte Aufgabe wird gelöst durch ein Filterelement eines Filtersystems mit wenigstens zwei filterelementseitigen Befestigungselementen, welche konzentrisch um dieselbe in Längsrichtung verlaufende Befestigungselement-Mittelachse des Filterelements angeordnet sind. Die Befestigungselement-Mittelachse des Filterelements ist versetzt zu wenigstens einer weiteren in Längsrichtung verlaufenden Filterelement-Mittelachse des Filterelements. Die Befestigungselement-Mittelachse kann auch versetzt zu wenigstens einer der weiteren in Längsrichtung verlaufenden Filterelement-Mittelachsen des Filterelements und versetzt zu wenigstens einer in Längsrichtung verlaufenden Filtergehäuseteil-Mittelachse des Filtergehäuseteils angeordnet sein. Die wenigstens zwei Befestigungselemente weisen einen unterschiedlichen radialen Abstand zu der wenigstens einen weiteren Mittelachse auf, zu welcher die Befestigungselement-Mittelachse des Filterelements, um welche die Befestigungselemente angeordnet sind, versetzt ist.

Eine weitere Aufgabe wird gelöst durch ein Filtergehäuseteil für ein Filtersystem mit wenigstens zwei gehäuseteilseitigen Befestigungselementen, welche konzentrisch um dieselbe in Längsrichtung verlaufende Befestigungselement-Mittelachse des Filtergehäuseteils angeordnet sind. Die Befestigungselement-Mittelachse des Filtergehäuseteils ist versetzt zu wenigstens einer weiteren in Längsrichtung verlaufenden Filtergehäuseteil-Mittelachse des Filtergehäuseteils. Die Befestigungselement-Mittelachse des Filtergehäuseteils kann auch versetzt zu wenigstens einer der weiteren in Längsrichtung verlaufenden Filtergehäuseteil-Mittelachsen des Filtergehäuseteils und versetzt zu wenigstens einer der in Längsrichtung verlaufenden Filterelement-Mittelachse des Filterelements angeordnet sein. Die wenigstens zwei gehäuseteilseitigen Befestigungselemente weisen einen unterschiedlichen radialen Abstand zu der wenigstens einen weiteren Mittelachse auf, zu welcher die Befestigungselement-Mittelachse des Filtergehäuseteils, um welche die gehäuseteilseitigen Befestigungselemente angeordnet sind, versetzt ist. Die Befestigungselement-Mittelachse des Filterelements, um welche die wenigstens zwei filterelementseitigen Befestigungselemente konzentrisch angeordnet sind, ist in einem Verwendungszustand deckungsgleich zur Befestigungselement-Mittelachse des Filtergehäuseteils angeordnet, um welche die wenigstens zwei gehäuseteilseitigen Befestigungselemente konzentrisch angeordnet sind.

Eine weitere Aufgabe wird gelöst durch ein Filtersystem mit einem Filtergehäuseteil, welches einen Innenraum, eine mit dem Innenraum gekoppelte Öffnung und wenigstens zwei gehäuseteilseitige Befestigungselemente umfasst, welche konzentrisch um eine Befestigungselement-Mittelachse des Filtergehäuseteils angeordnet sind. Im Innenraum des Filtergehäuseteils ist in einem Verwendungszustand ein Filterelement angeordnet. Das Filterelement umfasst ein Filtermedium und wenigstens eine Endscheibe. Wenigstens zwei filterelementseitige Befestigungselemente sind konzentrisch um eine Befestigungselement-Mittelachse des Filterelements an der Endscheibe angeordnet. Das Filterelement ist im Verwendungszustand lösbar über eine Befestigungsanordnung am Filtergehäuseteil befestigt, welche die wenigstens zwei filterelementseitigen Befestigungselemente und mit diesen zusammenwirkende wenigstens zwei gehäuseteilseitige Befestigungselemente aufweist. Die Befestigungselement-Mittelachse des Filterelements, um welche die wenigstens zwei filterelementseitigen Befestigungselemente konzentrisch angeordnet sind, ist versetzt zu wenigstens einer weiteren Filterelement-Mittelachse des Filterelements und/oder versetzt zu wenigstens einer Filtergehäuseteil-Mittelachse des Filtergehäuseteils angeordnet. Die Befestigungselement-Mittelachse des Filtergehäuseteils, um welche die wenigstens zwei gehäuseteilseitigen Befestigungselemente konzentrisch angeordnet sind, ist versetzt zu wenigstens einer weiteren Filtergehäuseteil-Mittelachse des Filtergehäuseteils und/oder versetzt zu wenigstens einer Filterelement-Mittelachse des Filterelements angeordnet. Im Verwendungszustand sind die Befestigungselement-Mittelachsen des Filtergehäuseteils und des Filterelements, um welche die korrespondierenden Befestigungselemente angeordnet sind, deckungsgleich zueinander angeordnet.

Eine weitere Aufgabe wird gelöst durch die Verwendung eines Filterelements in einem Filtersystem, wobei das Filterelement in einen Innenraum eines Filtergehäuseteils eingeführt wird und so zu dem Filtergehäuseteil ausgerichtet wird, dass die Befestigungselement-Mittelachse des Filterelements, um welche wenigstens zwei filterelementseitige Befestigungselemente konzentrisch angeordnet sind, deckungsgleich zu einer Befestigungselement-Mittelachse des Filtergehäuseteils angeordnet ist, um welche die wenigstens zwei gehäuseteilseitigen Befestigungselemente konzentrisch angeordnet sind. Die wenigstens zwei filterelementseitigen Befestigungselemente werden so zu den wenigstens zwei gehäuseteilseitigen Befestigungselementen ausgerichtet, dass die Befestigungselemente eine Befestigungsanordnung zur lösbaren Befestigung des Filterelements am Filtergehäuseteil, ausbilden.

Günstige Ausgestaltungen und Vorteile der Erfindung ergeben sich aus den weiteren Ansprüchen, der Beschreibung und der Zeichnung.

Es wird nach einem Aspekt der Erfindung ein Filterelement mit einem Filtermedium und wenigstens einer Endscheibe vorgeschlagen, wobei an der Endscheibe wenigstens zwei filterelementseitige Befestigungselemente angeordnet sind, welche konzentrisch um dieselbe in Längsrichtung verlaufende Befestigungselement-Mittelachse des Filterelements angeordnet sind. Die wenigstens eine Endscheibe kann eine Öffnung mit wenigstens einer in Längsrichtung verlaufenden Öffnungs-Mittelachse aufweisen. Die Befestigungselement-Mittelachse des Filterelements ist versetzt zu wenigstens einer in Längsrichtung verlaufenden Filterelement-Mittelachse des Filterelements oder versetzt zu wenigstens einer in Längsrichtung verlaufenden Filtergehäuseteil-Mittelachse eines Filtergehäuseteils, in welchem das Filterelement im Verwendungszustand angeordnet ist, oder versetzt zu wenigstens einer der weiteren in Längsrichtung verlaufenden Filterelement-Mittelachsen des Filterelements und versetzt zu wenigstens einer in Längsrichtung verlaufenden Filtergehäuseteil-Mittelachse des Filtergehäuseteils angeordnet. Die wenigstens zwei Befestigungselemente weisen einen unterschiedlichen Abstand zu der wenigstens einen weiteren Mittelachse auf, zu welcher die Befestigungselement-Mittelachse des Filterelements, um welche die filterelementseitigen Befestigungselemente angeordnet sind, versetzt ist.

Unter Endscheibe wird hierin sowohl eine endständige Abschlussscheibe verstanden, die direkt mit einem aus dem Filtermedium gebildeten Filtermediumkörper verbunden ist, aber auch ein hiervon separates Element, welches eine Scheibenform aufweist und bspw. an einem Mittelrohr des Filterelements angeordnet ist.

Unter einer Mittelachse wird im Folgenden eine Achse verstanden, welche in Längsrichtung des Filterelements oder des Filtergehäuseteils verläuft und welche mittig durch einen Querschnitt eines korrespondierenden Elements oder mittig durch einen Querschnitt eines Abschnittes des Elements verläuft. Die Querschnitte können rund oder eckig sein.

Hierbei kann eine Filterelement-Mittelachse eine Öffnungs-Mittelachse, eine Dichtungsabschnittsmittelachse, eine Endscheiben-Mittelachse, eine Mittelrohr-Mittelachse, eine Filtermedium-Mittelachse oder eine andere in Längsrichtung verlaufende Mittelachse durch ein anderes Element des Filterelements sein.

Hierbei kann eine Filtergehäuseteil-Mittelachse eine Öffnungs-Mittelachse, eine Verbindungsabschnitts-Mittelachse, eine Dichtungsabschnitts-Mittelachse oder eine andere in Längsrichtung verlaufende Mittelachse durch ein anderes Element des Filtergehäuseteils sein.

Die Querschnitte der Elemente oder die Querschnitte der Abschnitte der Elemente können rotationssymmetrisch zur korrespondierenden Mittelachse oder spiegelsymmetrisch zu wenigstens einer durch die korrespondierende Mittelachse verlaufenden Ebene oder Achse ausgeführt sein.

Das Filterelement kann mehrere Elemente und dadurch mehrere Mittelachsen aufweisen. Beispielsweise können die Endscheiben jeweils einen Querschnitt mit einer korrespondierenden Endscheiben-Mittelachse aufweisen. Zudem kann ein Mittelrohr, welches das Filterelement zumindest teilweise von innen abstützen kann und welches an der Endscheibe angeordnet ist, eine Mittelrohr-Mittelachse aufweisen. Ein Mantel, welcher das Filterelement zumindest teilweise von außen umgeben kann, kann eine Mantel-Mittelachse aufweisen. Zudem können Öffnungen der Endscheiben jeweils eine Öffnungs-Mittelachse aufweisen. Es ist auch vorstellbar, dass ein Element mehrere Abschnitte mit korrespondierenden Mittelachsen umfasst. Die Filtermedium-Mittalachse des Filtermediums kann eine Zentralmittelachse des Filterelements sein, zu welcher die Befestigungselement-Mittelachse versetzt angeordnet sein kann.

Die Mittelachsen der Elemente können deckungsgleich oder versetzt zueinander angeordnet sein. Beispielsweise können der Mantel und das Mittelrohr oder der Mantel oder das Mittelrohr mittig oder außermittig auf der Endscheibe angeordnet sein. Hierbei kann die Mantel-Mittelachse des Mantels bzw. die Mittelrohr-Mittelachse des Mittelrohrs versetzt zur Endscheiben-Mittelachse der Endscheibe angeordnet sein. Zudem kann die Mantel-Mittelachse des Mantels bzw. die Mittelrohr-Mittelachse des Mittelrohrs deckungsgleich oder versetzt zur Öffnungs-Mittelachse der wenigstens einen Öffnung in der Endscheibe angeordnet sein. Eine versetzte Anordnung der Mantel-Mittelachse des Mantels bzw. die Mittelrohr-Mittelachse des Mittelrohrs zur Endscheiben-Mittelachse der Endscheibe oder zur Öffnungs-Mittelachse der Öffnung oder zur Endscheiben-Mittelachse der Endscheibe und zur Öffnungs-Mittelachse der Öffnung ist ebenfalls vorstellbar. Mehrere Endscheiben können deckungsgleiche Endscheiben-Mittelachsen oder versetzt zueinander angeordnete Endscheiben-Mittelachsen aufweisen. Zudem können an den jeweiligen Endscheiben angeordnete Elemente deckungsgleiche oder versetzt zueinander angeordnete Mittelachsen aufweisen.

Das Filterelement kann mittig oder außermittig am Filtergehäuseteil angeordnet sein.

Unter einer versetzten Anordnung wird im Folgenden verstanden, dass die versetzt zu-einander angeordneten Mittelachsen insbesondere radial zueinander versetzt sind.

Die Befestigungselement-Mittelachse des Filterelements, um welche die wenigstens zwei filterelementseitigen Befestigungselemente angeordnet sind, bildet den Mittelpunkt von wenigstens einer Kreisfläche aus, wobei die wenigstens zwei filterelementseitigen Befestigungselemente auf einem Umfang der jeweiligen Kreisfläche angeordnet sind, wobei der Abstand der Befestigungselemente zur Befestigungselement-Mittelachse des Filterelements durch den Radius der Kreisfläche vorgeben ist. Hierbei können die wenigstens zwei filterelementseitigen Befestigungselemente auf dem Umfang derselben Kreisfläche oder jeweils auf dem Umfang von verschiedenen Kreisflächen um diese Befestigungselement-Mittelachse angeordnet sein. Das Filterelement kann beispielsweise zwei, drei, vier oder mehr Befestigungselemente umfassen. Hierbei können alle Befestigungselemente auf dem Umfang derselben Kreisfläche oder jeweils auf dem Umfang von verschiedenen Kreisflächen angeordnet sein. Zudem ist eine Anordnung vorstellbar, bei welcher wenigstens zwei Befestigungselemente auf dem Umfang derselben Kreisfläche angeordnet sind und die anderen Befestigungselemente auf dem Umfang von wenigstens einer anderen Kreisfläche angeordnet sind. Die Anordnung der wenigstens zwei filterelementseitigen Befestigungselemente ist im Wesentlichen lediglich dadurch begrenzt, dass die filterelementseitigen Befestigungselemente außermittig zur Mittelachse angeordnet sind, zu welcher die Befestigungselement-Mittelachse des Filterelements versetzt ist, um welche die wenigstens zwei filterelementseitigen Befestigungselemente angeordnet sind. Dadurch sind die Befestigungselemente asymmetrisch zu wenigstens einer Filterelement-Mittelachse des Filterelements und/oder zu wenigstens einer Filtergehäuseteil-Mittelachse des Filtergehäuseteils angeordnet. Hierbei können die wenigstens zwei filterelementseitigen Befestigungselemente unabhängig von einer Geometrie des Filterelements oder einer Geometrie des Filtergehäuseteils an der Endscheibe angeordnet werden, wodurch eine größere Vielfalt von Anordnungen der wenigstens zwei filterelementseitigen Befestigungselemente erreicht werden kann. Die wenigstens zwei filterelementseitigen Befestigungselemente sind hierbei an einer dem Filtermedium abgewandten Oberfläche der Endscheibe oder eines Mittelrohrs bzw. einem an dem Mittelrohr ausgebildeten Endscheibenabschnitt angeordnet. Die Anordnung der wenigstens zwei filterelementseitigen Befestigungselemente kann beispielsweise an den Einbauraum in einem korrespondierenden Filtersystem angepasst sein.

Da eine Befestigungsanordnung wenigstens zwei Befestigungselementpaare umfasst, wobei jedes Befestigungselementpaar jeweils ein filterelementseitiges Befestigungselement und ein gehäuseteilseitiges Befestigungselement umfasst, ist die Anordnung der wenigstens zwei filterelementseitigen Befestigungselemente zudem abhängig von der Anordnung der wenigstens zwei gehäuseteilseitigen Befestigungselemente, da zur Umsetzung einer wirksamen Verbindung eine komplementäre Anordnung der wenigstens zwei filterelementseitigen Befestigungselemente und der wenigstens zwei gehäuseteilseitigen Befestigungselemente vorteilhaft ist.

Durch die außermittige Anordnung der wenigstens zwei filterelementseitigen Befestigungselemente zu einer der Filterelement-Mittelachsen des Filterelements und/oder zu einer der Filtergehäuseteil-Mittelachsen des Filtergehäuseteils können die wenigstens zwei filterelementseitigen Befestigungselemente auch dann sinnvoll an der Endscheibe angeordnet sein, wenn das Filterelement oder eines der Elemente des Filterelements außermittig bzw. exzentrisch im Filtergehäuseteil angeordnet sind. Zudem kann bewirkt werden, dass nur für das korrespondierende Filtergehäuseteil konstruierte Filterelemente am Filtergehäuseteil befestigt werden. Dadurch kann ein Verbauen von nicht für das korrespondierende Filtergehäuseteil konstruierte Filterelemente erschwert oder verhindert werden, wodurch die Funktionalität einer korrespondierenden Filteranordnung verbessert und die Einhaltung eines Qualitätsstandards erleichtert werden kann. Zudem kann über die filterelementseitigen Befestigungselemente und die gehäuseteilseitigen Befestigungselemente eine Orientierung des Filterelements im Filtergehäuseteil vorgegeben sein. Ein Anwender kann durch das erfolgreiche Zusammenführen der wenigstens zwei filterelementseitigen Befestigungselemente und der wenigstens zwei gehäuseteilseitigen Befestigungselemente einfach nachvollziehen, ob das richtige Filterelement an der vorgesehenen Position in der vorgegebenen Ausrichtung im Filtergehäuseteil angeordnet ist. Durch den Versatz der Befestigungselement-Mittelachse des Filterelements, um welche die wenigstens zwei filterelementseitigen Befestigungselemente angeordnet sind, zu wenigstens einer der Filterelement-Mittelachsen des Filterelements und/oder zu wenigstens einer der Filtergehäuseteil-Mittelachsen des Filtergehäuseteils, können somit Montagefehler wie das Montieren eines ungeeigneten Filterelements in dem Filtergehäuseteil oder das Einführen mit einer anderen Ausrichtung als der vorgegebenen Ausrichtung vermieden oder zumindest erschwert werden. Zudem kann durch die Befestigungsanordnung eine zu geringe oder eine zu große Einführtiefe des Filterelements im Filtergehäuseteil vermieden oder zumindest erschwert werden.

Durch die Befestigungselement-Mittelachse des Filterelements, um welche die wenigstens zwei filterelementseitigen Befestigungselemente angeordnet sind, kann zudem ein Orientierungspunkt für die wenigstens zwei gehäuseteilseitigen Befestigungselemente geschaffen werden. Dadurch kann das Anordnen der wenigstens zwei gehäuseteilseitigen Befestigungselemente am Filtergehäuseteil bei asymmetrischer und/ oder versetzter und/oder exzentrischer Anordnung des Filterelements im Filtergehäuseteil oder der wenigstens zwei filterelementseitigen Befestigungselemente erleichtert werden. Insbesondere kann das Anordnen der wenigstens zwei gehäuseteilseitigen Befestigungselemente am Filtergehäuseteil erleichtert werden, wenn das Filterelement außermittig im Filtergehäuseteil angeordnet ist. Des Weiteren kann durch den Orientierungspunkt das Anordnen der gehäuseteilseitigen Befestigungselemente am Filtergehäuseteil trotz asymmetrischer und/oder exzentrischer und/oder versetzter Anordnung verschiedener Elemente des Filterelements oder verschiedener Elemente des Filtergehäuseteils erleichtert werden. Durch den Orientierungspunkt kann die Schaffung der Befestigungsanordnung mit Paaren aus filtergehäuseteilseitigen und filterelementseitigen Befestigungselementen erleichtert werden. Zudem kann das Zusammenführen der wenigstens zwei gehäuseteilseitigen Befestigungselemente und der wenigstens zwei filterelementseitigen Befestigungselemente erleichtert werden.

Unter einem Verwendungszustand wird im Folgenden ein Zustand verstanden, in welchem das Filterelement durch die Befestigungsanordnung am Filtergehäuseteil befestigt ist. Dadurch kann sichergestellt werden, dass das Filterelement, während es von einem Fluid durchströmt wird, in einer vorgegebenen Position im Filtergehäuseteil fixiert ist. Zudem kann das Einführen eines Verschlusselements in die Öffnung der Endscheibe durch das Fixieren des Filterelements am Filtergehäuseteil erleichtert werden. Zudem kann das Filtergehäuseteil zusammen mit dem fixierten Filterelement bewegt werden. Beispielsweise kann ein als Deckel ausgeführtes Filtergehäuseteil von einem weiteren Filtergehäuseteil abgehoben werden und mit ihm auch das Filterelement. Dadurch kann das Entleeren des aus den Filtergehäuseteilen gebildeten Gehäuses oder das Austauschen des Filterelements erleichtert werden.

Gemäß einer günstigen Ausgestaltung kann das Filtermedium zu einem insbesondere sternförmigen Faltenbalg plissiert sein. Es sind auch andere Formen vorstellbar. Die weitere Mittelachse, zu der die Befestigungselement-Mittelachse des Filterelements versetzt ist, kann hierbei eine Faltenbalg-Mittelachse des Faltenbalgs sein. Hierbei kann die "Zentralmittelachse" des Filterelements durch die Faltenbalg-Mittelachse des Faltenbalgs definiert sein, da dieser bevorzugt mit umlaufend gleichen Faltenhöhen ausgeführt werden kann. Es sind jedoch auch Ausführungen möglich, in denen das Filtermedium in Form eines Wickelkörpers angeordnet ist.

Zusätzlich oder alternativ kann die wenigstens eine Endscheibe die Öffnung mit wenigstens einer in Längsrichtung verlaufenden Öffnungs-Mittelachse aufweisen. Insbesondere kann die weitere Mittelachse, zu der die Befestigungselement-Mittelachse des Filterelements radial versetzt ist, bevorzugt die Öffnungs-Mittelachse der Öffnung sein.

Durch die außermittige Anordnung der wenigstens zwei filterelementseitigen Befestigungselemente zur Faltenbalg-Mittelachse und/oder zur Öffnungs-Mittalachse können nur für das korrespondierende Filtergehäuseteil konstruierte Filterelemente am Filtergehäuseteil befestigt werden. Hierbei können Filtergehäuseteile individuell gestaltete Filterelemente umfassen, wobei ein Verbauen von nicht für das korrespondierende Filtergehäuseteil konstruierte Filterelemente erschwert oder verhindert werden kann. Dadurch kann die Funktionalität einer korrespondierenden Filteranordnung verbessert und die Einhaltung eines Qualitätsstandards erleichtert werden. Durch den Versatz der Befestigungselement-Mittelachse des Filterelements, um welche die wenigstens zwei filterelementseitigen Befestigungselemente angeordnet sind, zur Faltenbalg-Mittelachse oder zur Öffnungsmittelachse, können somit Montagefehler wie das Montieren eines Filterelements in einem ungeeigneten Filtergehäuseteil oder das Einführen mit einer anderen Ausrichtung als der vorgegebenen Ausrichtung vermieden oder zumindest erschwert werden.

Gemäß einer günstigen Ausgestaltung können wenigstens zwei der wenigstens zwei filterelementseitigen Befestigungselemente unterschiedliche radiale Abstände zur Befestigungselement-Mittelachse aufweisen, um welche die Befestigungselemente angeordnet sind. Dadurch kann die Anordnung der wenigstens zwei filterelementseitigen Befestigungselemente an verschiedene Gegebenheiten angepasst werden. Hierbei können bei mehr als zwei filterelementseitigen Befestigungselementen alle Befestigungselemente unterschiedliche radiale Abstände zur Befestigungselement-Mittelachse aufweisen, oder die filterelementseitigen Befestigungselemente sind in Gruppen aufgeteilt, wobei eine erste Gruppe mit filterelementseitigen Befestigungselementen einen ersten radialen Abstand zur Befestigungselement-Mittelachse aufweist und eine zweite Gruppe mit filterelementseitigen Befestigungselementen einen zweiten radialen Abstand zur Befestigungselement-Mittelachse aufweist. Hierbei sind mehrere Gruppen mit filterelementseitigen Befestigungselementen mit entsprechenden radialen Abständen zur Befestigungselement-Mittelachse vorstellbar. Zudem sind die wenigstens zwei filterelementseitigen Befestigungselemente außermittig zur Mittelachse angeordnet, zu welcher die Befestigungselement-Mittelachse des Filterelements versetzt ist.

Gemäß einer günstigen Ausgestaltung können wenigstens zwei der wenigstens zwei filterelementseitigen Befestigungselemente mit gleichem radialem Abstand zur Befestigungselement-Mittelachse angeordnet sein. Beispielsweise können alle filterelementseitigen Befestigungselemente den gleichen radialen Abstand zur Befestigungselement-Mittelachse aufweisen. Alternativ können zwei der filterelementseitigen Befestigungselemente mit gleichem radialem Abstand zur Befestigungselement-Mittelachse angeordnet sein und die anderen filterelementseitigen Befestigungselemente können von diesem radialen Abstand abweichende radiale Abstände zur Befestigungselement-Mittelachse aufweisen. Zudem ist eine Aufteilung der filterelementseitigen Befestigungselemente in Gruppen vorstellbar, wobei die Befestigungselemente einer Gruppe mit gleichem radialem Abstand zur Befestigungselement-Mittelachse angeordnet sind und die Gruppen sich durch den radialen Abstand zur Befestigungselement-Mittelachse voneinander unterscheiden. Zudem sind die wenigstens zwei filterelementseitigen Befestigungselemente außermittig zur Mittelachse angeordnet, zu welcher die Befestigungselement-Mittelachse des Filterelements versetzt ist. In Ausführungen sind hierbei zumindest drei filterelementseitige Befestigungselemente erforderlich.

Gemäß einer günstigen Ausgestaltung können wenigstens zwei der wenigstens zwei filterelementseitigen Befestigungselemente voneinander mit gleichem Bogenmaß oder Gradmaß beabstandet sein. Beispielsweise können alle Befestigungselemente voneinander mit gleichem Bogenmaß oder Gradmaß beabstandet sein. Dadurch kann eine gleichmäßige Anordnung der filterelementseitigen Befestigungselemente um die Befestigungselement-Mittelachse und dadurch eine gleichmäßige Kraftverteilung geschaffen werden. Optional oder zusätzlich können mehrere der filterelementseitigen Befestigungselemente voneinander mit unterschiedlichem Bogenmaß oder Gradmaß beabstandet sein. Hierbei können die filterelementseitigen Befestigungselemente unregelmäßig um die Befestigungselement-Mittelachse angeordnet werden, dadurch kann die Anordnung der filterelementseitigen Befestigungselemente an einen Bauraum besser angepasst werden. Optional oder zusätzlich können wenigstens zwei der wenigstens zwei filterelementseitigen Befestigungselemente achsensymmetrisch und/oder wenigstens zwei der wenigstens zwei filterelementseitigen Befestigungselemente können rotationssymmetrisch zur Mittelachse angeordnet sein. Durch eine symmetrische Anordnung der filterelementseitigen Befestigungselemente um die Mittelachse kann das Anpassen der Position der korrespondierenden gehäuseteilseitigen Befestigungselemente erleichtert werden.

Gemäß einer günstigen Ausgestaltung können die wenigstens zwei Befestigungselemente hakenförmig ausgebildet sein. Insbesondere können die wenigstens zwei hakenförmigen Befestigungselemente einen Hakenschenkel mit rechteckigem oder trapezförmigem Querschnitt aufweisen, wobei insbesondere die Basis des Hakenschenkels einen rechteckigen oder trapezförmigen Querschnitt aufweist, welcher sich zu einem Kopplungsbereich hin verjüngt. Der Hakenschenkel geht in den Kopplungsbereich über. Der Kopplungsbereich kann auf einer Unterseite eine Anlagefläche aufweisen, welche von dem Hakenschenkel absteht. Der Kopplungsbereich kann an einer Oberseite schräg verlaufende Führungsflächen aufweisen. Durch die schrägverlaufenden Führungsflächen weist das Befestigungselement einen schmalen oberen Endbereich auf, welcher in drei Schrägen übergeht. Die Anlagefläche kann in etwa einen rechten Winkel zum Hakenschenkel aufweisen. Es sind auch kleinere oder größere Winkel möglich. Hierbei kann die Ausrichtung der Hakenelemente, insbesondere die Ausrichtung des Kopplungsbereichs, ebenfalls nahezu frei gewählt werden. Beispielsweise könnten die Hakenelemente in Richtung der Befestigungselement-Mittelachse oder von der Befestigungselement-Mittelachse wegweisen. Zudem kann jedes Hakenelement eine von den anderen Hakenelementen verschiedene Ausrichtung aufweisen. Die Hakenelemente können mit gehäuseteilseitigen komplementären hakenförmigen Befestigungselementen zusammenwirken, oder mit Rastöffnungen oder mit Rastkanten zusammenwirken. Die hakenförmigen Elemente können einfach an einer dem Filtermedium abgewandten Oberfläche der Endscheibe angeordnet werden.

Gemäß einer günstigen Ausgestaltung kann das Filterelement eine weitere Endscheibe aufweisen, welche an einem der zumindest einen Endscheibe abgewandten Ende des Filtermediums angeordnet ist. Dadurch kann das Filterelement zwei Endscheiben aufweisen, welche an unterschiedlichen Endbereichen des Filtermediums angeordnet sind.

Gemäß einer günstigen Ausgestaltung kann das Filterelement ein Mittelrohr aufweisen, welches von dem Filtermedium umgeben ist. Die weitere Mittelachse, zu der die Befestigungselement-Mittelachse des Filterelements radial versetzt ist, kann bevorzugt die Mittelrohr-Mittelachse des Mittelrohrs sein. Durch die außermittige Anordnung der wenigstens zwei filterelementseitigen Befestigungselemente zur Mittelrohr-Mittelachse können nur für das korrespondierende Filtergehäuseteil konstruierte Filterelemente am Filtergehäuseteil befestigt werden. Hierbei können Filtergehäuseteile individuell gestaltete Filterelemente umfassen, wobei ein Verbauen von nicht für das korrespondierende Filtergehäuseteil konstruierte Filterelemente erschwert oder verhindert werden kann. Dadurch kann die Funktionalität einer korrespondierenden Filteranordnung verbessert und die Einhaltung eines Qualitätsstandards erleichtert werden. Durch den Versatz der Befestigungselement-Mittelachse des Filterelements, um welche die wenigstens zwei filterelementseitigen Befestigungselemente angeordnet sind, zur Mittelrohr-Mittelachse, können somit Montagefehler wie das Montieren eines Filterelements in einem ungeeigneten Filtergehäuseteil oder das Einführen mit einer anderen Ausrichtung als der vorgegebenen Ausrichtung vermieden oder zumindest erschwert werden.

Gemäß einer günstigen Ausgestaltung kann wenigstens ein Führungselement an wenigstens einer der Endscheiben und/oder an einem Mantel und/oder am Mittelrohr angeordnet sein. Das wenigstens eine Führungselement kann zur Definition einer eindeutigen Winkelpositionierung gegenüber dem Filtergehäuseteil, an welchem das Filterelement im einem Verwendungszustand anordenbar ist, ausgebildet sein. Das Filterelement kann durch die Führungselemente von entsprechenden Führungselementen des Filtergehäuseteils geführt werden, wodurch das Filterelement in dem vorgegeben Verwendungszustand und je nach Führung in einer bestimmten Ausrichtung am Filtergehäuseteil angeordnet ist. Dadurch kann das Zusammenführen der filterelementseitigen Befestigungselemente und der gehäuseteilseigen Befestigungselemente erleichtert werden. Durch die Befestigungselemente kann das Filterelement am Filtergehäuseteil in dieser Stellung fixiert werden, wodurch ein ungewolltes Verrutschen des Filterelements im Filtergehäuseteil im Betrieb oder beim Transport oder beim Einführen des Verschlusselements vermieden werden kann. Zudem kann das Zusammenführen der filterelementseitigen Befestigungselemente und der filtergehäuseteilseitigen Befestigungselemente durch die Führungselemente erleichtert werden.

Gemäß einer günstigen Ausgestaltung kann das wenigstens ein Führungselement als radiale Auskragung oder Einbuchtung an einem Außenumfang der korrespondierenden Endscheibe und/oder des Mantels und/oder des Mittelrohrs ausgebildet sein. Dadurch können Führungselemente einfach am entsprechenden Element ausgebildet werden.

Nach einem weiteren Aspekt der Erfindung wird ein Filtergehäuseteil für ein Filtersystem vorgeschlagen, mit einem Innenraum, welcher dazu ausgelegt ist, ein Filterelement zumindest teilweise aufzunehmen, eine mit dem Innenraum gekoppelten Öffnung mit wenigstens einer in Längsrichtung verlaufenden Öffnungs-Mittelachse, und wenigstens zwei gehäuseteilseitigen Befestigungselementen, welche konzentrisch um dieselbe in Längsrichtung verlaufende Befestigungselement-Mittelachse des Filtergehäuseteils angeordnet sind. Die Befestigungselement-Mittelachse des Filtergehäuseteils, um welche die gehäuseteilseitigen Befestigungselemente konzentrisch angeordnet sind, ist radial versetzt zu wenigstens einer weiteren in Längsrichtung verlaufenden Filtergehäuseteil-Mittelachse des Filtergehäuseteils oder versetzt zu wenigstens einer in Längsrichtung verlaufenden Filterelement-Mittelachse des Filterelements, welches in einem Verwendungszustand im Innenraum anordenbar ist, oder versetzt zu der wenigstens einen weiteren in Längsrichtung verlaufenden Filtergehäuseteil-Mittelachse des Filtergehäuseteils und versetzt zu wenigstens einer der in Längsrichtung verlaufenden Filterelement-Mittelachsen des Filterelements angeordnet. Die wenigstens zwei gehäuseteilseitigen Befestigungselemente weisen einen unterschiedlichen radialen Abstand zu der wenigstens einen weiteren Mittelachse auf, zu welcher die Befestigungselement-Mittelachse des Filtergehäuseteils, um welche die gehäuseteilseitigen Befestigungselemente angeordnet sind, versetzt ist. Die Befestigungselement-Mittelachse des Filterelements, um welche die wenigstens zwei filterelementseitigen Befestigungselemente konzentrisch angeordnet sind, ist in einem Verwendungszustand deckungsgleich zur Befestigungselement-Mittelachse des Filtergehäuseteils angeordnet, um welche die wenigstens zwei gehäuseteilseitigen Befestigungselemente konzentrisch angeordnet sind. Hierbei kann das Anordnen der filterelementseitigen Befestigungselemente am Filterelement und der gehäuseteilseitigen Befestigungselemente am Filtergehäuseteil erleichtert werden. Zudem kann das Schaffen zusammenwirkender Paare aus filterelementseitigen Befestigungselementen und gehäuseteilseitigen Befestigungselemente auch bei asymmetrischer Anordnung erleichtert werden.

Das Filtergehäuseteil kann als Filtertopf oder als Filterdeckel für einen Flüssigkeitsfilter, insbesondere für einen Kraftstoff- oder Ölfilter ausgebildet sein.

Die Öffnung des Filtergehäuseteils kann wenigstens zwei in Längsrichtung hintereinander angeordnete Abschnitte aufweisen, wobei wenigstens ein Verbindungsabschnitt der Öffnung eine in Längsrichtung verlaufende Verbindungsabschnitts-Mittelachse aufweist und wenigstens ein Dichtungsabschnitt der Öffnung eine in Längsrichtung verlaufende Dichtungsabschnitts-Mittelachse und wenigstens einen Dichtungsbereich aufweist. Die Verbindungsabschnitts-Mittelachse des wenigstens einen Verbindungsabschnitts kann versetzt zur Dichtungsabschnitts-Mittelachse des wenigstens einen Dichtungsabschnitts angeordnet sein. Der wenigstens eine Verbindungsabschnitt der Öffnung kann mit einem Verbindungssegment eines Verschlusselements eine lösbare Verbindung ausbilden und wenigstens ein Dichtungsbereich eines Verschlusssegments des Verschlusselements kann mit dem Dichtungsbereich des wenigstens einen Dichtungsabschnitts der Öffnung und mit einem Dichtungselement eine Dichtungsanordnung ausbilden. Hierbei kann die Befestigungselement-Mittelachse des Filtergehäuseteils, um welche die wenigstens zwei gehäuseteilseitigen Befestigungselemente angeordnet sind, versetzt zu beiden Mittelachsen der Öffnung oder deckungsgleich zu einer der Öffnungen angeordnet sein.

In einer optionalen Ausgestaltung können die Öffnungs-Mittelachsen der Öffnung deckungsgleich angeordnet sein. Hierbei kann die Befestigungselement-Mittelachse des Filtergehäuseteils, um welche die wenigstens zwei gehäuseteilseitigen Befestigungselemente angeordnet sind, versetzt zu den deckungsgleichen Öffnungs-Mittelachsen der Öffnung angeordnet sein. Optional kann die Befestigungselement-Mittelachse des Filtergehäuseteils, um welche die wenigstens zwei gehäuseteilseitigen Befestigungselemente angeordnet sind, deckungsgleich zu den deckungsgleich angeordneten Öffnungs-Mittelachsen der Öffnung angeordnet und versetzt zu einer der anderen Filtergehäuseteil-Mittelachsen des Filtergehäuseteils und/oder versetzt zu wenigstens einer der Filterelement-Mittelachsen des Filterelements angeordnet sein.

Die Öffnung kann zudem außermittig bei einer zylinderförmigen Ausführung des Filtergehäuseteils exzentrisch am Filtergehäuseteil angeordnet sein, wodurch die wenigstens eine Öffnungs-Mittelachse der Öffnung versetzt zu einer Gehäusewand-Mittelachse angeordnet ist, um welche die Gehäusewand des Filtergehäuseteils verläuft. Hierbei kann die Befestigungselement-Mittelachse des Filtergehäuseteils, um welche die wenigstens zwei gehäuseteilseitigen Befestigungselemente angeordnet sind, versetzt zur wenigstens einen Öffnungs-Mittelachse der Öffnung oder versetzt zur Gehäusewand-Mittelachse der Gehäusewand angeordnet sein. Zusätzlich ist eine versetzte Anordnung der Befestigungselement-Mittelachse des Filtergehäuseteils, um welche die wenigstens zwei gehäuseteilseitigen Befestigungselemente angeordnet sind, zu einer der Filterelement-Mittelachsen des Filterelements möglich.

Die Befestigungselement-Mittelachse des Filtergehäuseteils, um welche die wenigstens zwei gehäuseteilseitigen Befestigungselemente angeordnet sind, bildet den Mittelpunkt von wenigstens einer Kreisfläche aus, wobei die wenigstens zwei gehäuseteilseitigen Befestigungselemente auf einem Umfang der jeweiligen Kreisfläche angeordnet sind, wobei der Abstand der gehäuseteilseitigen Befestigungselemente zur Befestigungselement-Mittelachse durch den Radius der Kreisfläche vorgeben ist. Hierbei können die wenigstens zwei gehäuseteilseitigen Befestigungselemente auf dem Umfang derselben Kreisfläche oder jeweils auf dem Umfang von verschiedenen Kreisflächen um diese Befestigungselement-Mittelachse angeordnet sein. Die Anordnung der wenigstens zwei gehäuseteilseitigen Befestigungselemente ist im Wesentlichen lediglich dadurch begrenzt, dass die gehäuseteilseitigen Befestigungselemente außermittig zur Mittelachse angeordnet sind, zu welcher die Befestigungselement-Mittelachse versetzt ist, um welche die wenigstens zwei gehäuseteilseitigen Befestigungselemente angeordnet sind. Dadurch sind die gehäuseteilseitigen Befestigungselemente asymmetrisch zu wenigstens einer Filterelement-Mittelachse des Filterelements und/oder zu wenigstens einer Filtergehäuseteil-Mittelachse des Filtergehäuseteils angeordnet. Hierbei können die wenigstens zwei gehäuseteilseitigen Befestigungselemente unabhängig von einer Geometrie des Filtergehäuses an einem Gehäuseboden oder an einem dem Innenraum zugewandten Rand der Öffnung angeordnet werden, wodurch eine größere Vielfalt von Anordnungen der wenigstens zwei gehäuseteilseitigen Befestigungselemente erreicht werden kann. Die Anordnung der wenigstens zwei filterelementseitigen Befestigungselemente kann hierbei beispielsweise an den Einbauraum eines korrespondierenden Filtersystems angepasst sein.

Da eine Befestigungsanordnung wenigstens zwei Befestigungselementpaare umfasst, wobei jedes Befestigungselementpaar jeweils ein filterelementseitiges Befestigungselement und ein gehäuseteilseitiges Befestigungselement umfasst, ist die Anordnung der wenigstens zwei gehäuseteilseitigen Befestigungselemente zudem abhängig von der Anordnung der wenigstens zwei filterelementseitigen Befestigungselemente, da zur Umsetzung einer wirksamen Verbindung eine komplementäre Anordnung der wenigstens zwei gehäuseteilseitigen Befestigungselemente und der wenigstens zwei filterelementseitigen Befestigungselemente vorteilhaft ist.

Durch die außermittige Anordnung der wenigstens zwei gehäuseteilseitigen Befestigungselemente zu wenigstens einer der Filterelement-Mittelachsen des Filterelements und/oder zu wenigstens einer Filtergehäuseteil-Mittelachse des Filtergehäuseteils können die wenigstens zwei gehäuseteilseitigen Befestigungselemente auch dann sinnvoll am Gehäuseteil angeordnet sein, wenn das Filtergehäuseteil oder eines der Elemente des Filtergehäuseteils außermittig bzw. exzentrisch zum im Filtergehäuseteil angeordneten Filterelement angeordnet sind. Zudem kann bewirkt werden, dass nur für das korrespondierende Filtergehäuseteil konstruierte Filterelemente am Filtergehäuseteil befestigt werden. Dadurch kann ein Verbauen von nicht für das korrespondierende Filtergehäuseteil konstruierte Filterelemente erschwert oder verhindert werden, wodurch die Funktionalität einer korrespondierenden Filteranordnung verbessert und die Einhaltung eines Qualitätsstandards erleichtert werden kann. Zudem kann über die filterelementseitigen Befestigungselemente und die gehäuseteilseitigen Befestigungselemente eine Orientierung des Filterelements im Filtergehäuseteil vorgegeben sein. Ein Anwender kann durch das erfolgreiche Zusammenführen der wenigstens zwei filterelementseitigen Befestigungselemente und der wenigstens zwei gehäuseteilseitigen Befestigungselemente einfach nachvollziehen, ob das richtige Filterelement an der vorgesehenen Position in der vorgegebenen Ausrichtung im Filtergehäuseteil angeordnet ist. Durch den Versatz der Befestigungselement-Mittelachse des Filtergehäuseteils, um welche die wenigstens zwei gehäuseteilseitigen Befestigungselemente angeordnet sind, zu einer der Filterelement-Mittelachsen des Filterelements und/oder zu einer Filtergehäuseteil-Mittelachse des Filtergehäuseteils, können somit Montagefehler, wie das Montieren eines nicht für das Filtergehäuseteil gedachten Filterelements in dem Filtergehäuseteil oder das Einführen mit einer anderen Ausrichtung als der vorgegebenen Ausrichtung, vermieden oder zumindest erschwert werden. Zudem kann durch die Befestigungsanordnung eine zu geringe oder eine zu große Einführtiefe des Filterelements im Filtergehäuseteil vermieden oder zumindest erschwert werden.

Durch die Befestigungselement-Mittelachse des Filtergehäuseteils, um welche die wenigstens zwei gehäuseteilseitigen Befestigungselemente angeordnet sind, kann zudem ein Orientierungspunkt für die wenigstens zwei filterelementseitigen Befestigungselemente geschaffen werden, wodurch das Anordnen der wenigstens zwei filterelementseitigen Befestigungselemente bei asymmetrischer Anordnung der wenigstens zwei gehäuseteilseitigen Befestigungselemente am Filtergehäuseteil erleichtert werden kann, insbesondere wenn das Filterelement außermittig im Filtergehäuse angeordnet ist. Zudem kann das Zusammenführen der wenigstens zwei gehäuseteilseitigen Befestigungselemente und der wenigstens zwei filterelementseitigen Befestigungselemente erleichtert werden.

Gemäß einer günstigen Ausgestaltung können wenigstens zwei der wenigstens zwei gehäuseteilseitigen Befestigungselemente unterschiedliche radiale Abstände zur Befestigungselement-Mittelachse des Filtergehäuseteils aufweisen. Dadurch kann die Anordnung der wenigstens zwei gehäuseteilseitigen Befestigungselemente an verschiedene Gegebenheiten angepasst werden. Hierbei können bei mehr als zwei gehäuseteilseitigen Befestigungselementen alle Befestigungselemente unterschiedliche radiale Abstände zur Befestigungselement-Mittelachse des Filtergehäuseteils aufweisen, oder die gehäuseteilseitigen Befestigungselemente sind in Gruppen aufgeteilt, wobei eine erste Gruppe mit gehäuseteilseitigen Befestigungselementen einen ersten radialen Abstand zur Befestigungselement-Mittelachse des Filtergehäuseteils aufweist und eine zweite Gruppe mit gehäuseteilseitigen Befestigungselementen weist einen zweiten radialen Abstand zur Befestigungselement-Mittelachse des Filtergehäuseteils auf. Hierbei sind mehrere Gruppen mit gehäuseteilseitigen Befestigungselementen mit entsprechenden radialen Abständen zur Mittelachse vorstellbar. In Ausführungen sind hierbei zumindest drei gehäuseteilseitige Befestigungselemente erforderlich.

Gemäß einer günstigen Ausgestaltung können wenigstens zwei der wenigstens zwei gehäuseteilseitigen Befestigungselemente mit gleichem radialem Abstand zur Befestigungselement-Mittelachse des Filtergehäuseteils angeordnet sein. Beispielsweise können alle gehäuseteilseitigen Befestigungselemente den gleichen radialen Abstand zur Befestigungselement-Mittelachse des Filtergehäuseteils aufweisen. Alternativ können zwei der gehäuseteilseitigen Befestigungselemente mit gleichem radialem Abstand zur Befestigungselement-Mittelachse des Filtergehäuseteils angeordnet sein und die anderen gehäuseteilseitigen Befestigungselemente können von diesem radialen Abstand abweichende radiale Abstände zur Befestigungselement-Mittelachse des Filtergehäuseteils aufweisen. Zudem ist eine Aufteilung der gehäuseteilseitigen Befestigungselemente in Gruppen vorstellbar, wobei die Befestigungselemente einer Gruppe mit gleichem radialem Abstand zur Mittelachse angeordnet sind und die Gruppen sich durch den radialen Abstand zur Mittelachse voneinander unterscheiden.

Optional oder zusätzlich können wenigstens zwei der wenigstens zwei gehäuseteilseitigen Befestigungselemente voneinander mit gleichem Bogenmaß oder Gradmaß beabstandet sein. Hierbei kann eine gleichmäßige Anordnung der gehäuseteilseitigen Befestigungselemente um die Mittelachse geschaffen werden.

Optional oder zusätzlich können wenigstens zwei der wenigstens zwei gehäuseteilseitigen Befestigungselemente achsensymmetrisch und/oder wenigstens zwei der wenigstens zwei gehäuseteilseitigen Befestigungselemente können rotationssymmetrisch zur Mittelachse angeordnet sein. Durch eine symmetrische Anordnung der gehäuseteilseitigen Befestigungselemente um die Mittelachse kann das Anpassen der Position der filterelementseitigen Befestigungselemente erleichtert werden.

Optional oder zusätzlich können mehrere der filterelementseitigen Befestigungselemente voneinander mit unterschiedlichem Bogenmaß oder Gradmaß beabstandet sein. Hierbei können die filterelementseitigen Befestigungselemente unregelmäßig um die Befestigungselement-Mittelachse angeordnet werden, dadurch kann die Anordnung der filterelementseitigen Befestigungselemente an einen Bauraum besser angepasst werden.

Gemäß einer günstigen Ausgestaltung können die wenigstens zwei gehäuseteilseitigen Befestigungselemente hakenförmig oder als Kante mit einer Angriffsfläche ausgebildet sein. Hakenförmige Befestigungselemente können an einem Boden oder einer Decke oder einer Gehäusewand des Gehäuseteils angeordnet werden. Kanten mit einer Angriffsfläche können am Boden oder an der Decke oder an einer die Öffnung begrenzenden nach innen abstehenden Wand angeordnet werden. Optional oder zusätzlich können Kanten mit Angriffsflächen von radial nach innen von einer Gehäusewand abstehenden Vorsprüngen ausgebildet werden. Insbesondere können die wenigstens zwei hakenförmigen Befestigungselemente einen Hakenschenkel mit rechteckigem oder trapezförmigem Querschnitt aufweisen, wobei insbesondere die Basis des Hakenschenkels einen rechteckigen oder trapezförmigen Querschnitt aufweist, welcher sich zu einem Kopplungsbereich hin verjüngt. Der Hakenschenkel geht in den Kopplungsbereich über. Der Kopplungsbereich kann auf einer Unterseite eine Anlagefläche aufweisen, welche von dem Hakenschenkel absteht. Der Kopplungsbereich kann an einer Oberseite schräg verlaufende Führungsflächen aufweisen. Durch die schrägverlaufenden Führungsflächen weist das Befestigungselement einen schmalen oberen Endbereich auf, welcher in drei Schrägen übergeht. Die Anlagefläche kann in etwa einen rechten Winkel zum Hakenschenkel aufweisen. Es sind auch kleinere oder größere Winkel möglich. Hierbei kann die Ausrichtung der Hakenelemente insbesondere die Ausrichtung des Kopplungsbereichs ebenfalls nahezu frei gewählt werden. Beispielsweise könnten die Hakenelemente in Richtung der Befestigungselement-Mittelachse oder von der Befestigungselement-Mittelachse wegweisen. Zudem kann jedes Hakenelement eine von den anderen Hakenelementen verschiedene Ausrichtung aufweisen. Die Hakenelemente können mit filterelementseitigen komplementären hakenförmigen Befestigungselementen zusammenwirken. Die Anlageflächen der gehäuseteilseitigen Befestigungselemente und die Anlageflächen der filterelementseitigen Befestigungselemente liegen im Verwendungszustand aneinander an.

Eine Kante kann durch einen Vorsprung oder eine Auskragung ausgebildet werden. Alternativ oder zusätzlich kann eine Kante durch eine Befestigungsöffnung ausgebildet werden, wobei die Kante die Öffnung umgibt. Die Angriffsfläche kann einem Bereich der Kante entsprechen, an welchem die Anlagefläche des Hakenelements des Filterelements im Verwendungszustand anliegt.

Gemäß einer günstigen Ausgestaltung kann wenigstens ein Führungselement an wenigstens einer Gehäusewand des Filtergehäuseteils angeordnet sein. Hierbei kann das wenigstens eine Führungselement wenigstens ein Führungselement des Filterelements führen. Insbesondere kann das wenigstens eine Führungselemente des Filtergehäuseteils zur Definition einer eindeutigen Winkelpositionierung des Filterelements gegenüber dem Filtergehäuseteil, an welchem das Filterelement in einem Verwendungszustand anordenbar ist, ausgebildet sein. Durch die Führung des Filterelements in einen Verwendungszustand können am Filterelement angeordnete filterelementseitige Befestigungselemente und an dem Filtergehäuseteil angeordnete gehäuseteilseitige Befestigungselemente zusammengeführt werden. Hierbei können die Führungselemente derart ausgebildet sein, dass das Filterelement nur mit einer bestimmten Ausrichtung in das Filtergehäuseteil eingeführt werden kann. Beispielsweise können ein Führungselement am Filtergehäuseteil und ein Führungselement am Filterelement breiter als andere Führungselemente ausgeführt sein.

Gemäß einer günstigen Ausgestaltung kann das wenigstens ein Führungselement als radiale Auskragung oder Einbuchtung an einem Innenumfang der Gehäusewand ausgebildet sein. Dadurch können Führungselemente einfach an der Gehäusewand ausgebildet werden, beispielsweise kann ein Einlegeteil mit der Auskragung oder der Einbuchtung an der Gehäusewand anliegen. Alternativ oder zusätzlich kann die Auskragung oder die Einbuchtung direkt in die Gehäusewand eingebracht, beispielsweise eingestanzt, sein.

Nach einem weiteren Aspekt der Erfindung wird ein Filtersystem vorgeschlagen mit einem Filtergehäuseteil, welches einen Innenraum, eine mit dem Innenraum gekoppelte Öffnung und wenigstens zwei gehäuseteilseitige Befestigungselemente umfasst, welche konzentrisch um eine Befestigungselement-Mittelachse des Filtergehäuseteils angeordnet sind. Im Innenraum des Filtergehäuseteils ist in einem Verwendungszustand ein Filterelement angeordnet, wobei das Filterelement ein Filtermedium und wenigstens eine Endscheibe umfasst. Wenigstens zwei filterelementseitige Befestigungselemente sind konzentrisch um eine Befestigungselement-Mittelachse des Filterelements an der Endscheibe angeordnet, wobei das Filterelement in dem Verwendungszustand lösbar über eine Befestigungsanordnung am Filtergehäuseteil befestigt ist, welche die wenigstens zwei filterelementseitigen Befestigungselemente und mit diesen zusammenwirkende wenigstens zwei gehäuseteilseitige Befestigungselemente aufweist. Die Befestigungselement-Mittelachse des Filterelements, um welche die wenigstens zwei filterelementseitigen Befestigungselemente konzentrisch angeordnet sind, ist versetzt zu wenigstens einer weiteren Filterelement-Mittelachse des Filterelements und/oder versetzt zu wenigstens einer Filtergehäuseteil-Mittelachse des Filtergehäuseteils angeordnet. Die Befestigungselement-Mittelachse des Filtergehäuseteils, um welche die wenigstens zwei gehäuseteilseitigen Befestigungselemente konzentrisch angeordnet sind, ist versetzt zu wenigstens einer weiteren Filtergehäuseteil-Mittelachse des Filtergehäuseteils und/oder versetzt zu wenigstens einer Filterelement-Mittelachse des Filterelements angeordnet. Im Verwendungszustand sind die Befestigungselement-Mittelachsen des Filterelements und des Filtergehäuseteils, um welche die korrespondierenden Befestigungselemente angeordnet sind, deckungsgleich zueinander angeordnet.

Das Filterelement ist im Verwendungszustand in vorteilhafter Weise lösbar über die Befestigungsanordnung am Filtergehäuseteil befestigt. Die Verteilung der filterelementseitigen Befestigungselemente am Filterelement kann lediglich durch die Position der gehäuseteilseitigen Befestigungselemente am Filtergehäuseteil, mit welchen diese eine Verbindung ausbilden, beschränkt sein. Hierbei können Paare aus filterelementseitigen Befestigungselementen und gehäuseteilseitigen Befestigungselementen gebildet werden. Wie die Paare zueinander angeordnet sind, kann je nach Bauraum oder in Abhängigkeit von anderen Faktoren frei gewählt werden. Durch die Befestigungsanordnung kann das Filterelement sicher im Filtergehäuseteil gehalten werden, wodurch im Betrieb oder beim Transport oder beim Einführen eines Verschlusselements ein Verrutschen des Filterelements erschwert werden kann, wodurch die Zuverlässigkeit des Filtersystems verbessert werden kann. Zudem kann das Filterelement zusammen mit dem Filtergehäuseteil von einem anderen Filtergehäuseteil entfernt werden.

Die Öffnung des Filtergehäuseteils kann außermittig bei einer zylinderförmigen Ausführung des Filtergehäuseteils exzentrisch am Filtergehäuseteil angeordnet sein. Dadurch kann wenigstens eine Öffnungs-Mittelachse der Öffnung versetzt zu einer Filtergehäuseteil-Mittelachse des Filtergehäuseteils angeordnet sein. Zudem kann die Öffnung in Schwererichtung an einer unten liegenden Seite des Filtergehäuseteils oder an einer oben liegenden Seite des Filtergehäuseteils angeordnet sein.

Das Filterelement kann mittig oder außermittig im Filtergehäuseteil angeordnet sein. Eine an der Endscheibe angeordnete Öffnung des Filterelements kann außermittig bei einer zylinderförmigen Ausführung des Filterelements exzentrisch am Filterelement angeordnet sein. Dadurch kann wenigstens eine Öffnungs-Mittelachse der Öffnung versetzt zu einer Filterelement-Mittelachse des Filterelements angeordnet sein. Zudem kann die Öffnung in Schwererichtung an einer unten liegenden Endscheibe des Filterelements oder an einer oben liegenden Endscheibe des Filterelements angeordnet sein.

Eine Anordnung der Öffnungen kann bei der frei wählbaren Anordnung der filterelementseitigen und der gehäuseteilseitigen Befestigungselemente berücksichtigt werden. Zudem bilden die Befestigungselement-Mittelachsen, um welche die jeweiligen Befestigungselemente angeordnet sind, Orientierungspunkte für die Anordnung der korrespondierenden Befestigungselemente aus, wobei diese Orientierungspunkte unabhängig von vorhandenen Symmetrien sind. Hierbei weist ein gehäuseteilseitiges Befestigungselement und ein korrespondierendes filterelementseitiges Befestigungselement, welche ein Befestigungselementpaar ausbilden, von der korrespondierenden Befestigungselement-Mittelachse, um welche die Befestigungselemente angeordnet sind, denselben Abstand auf. Zudem ist die Anordnung der filterelementseitigen Befestigungselemente um die korrespondierende Befestigungselement-Mittelachse des Filterelements dieselbe Anordnung wie die Anordnung der gehäuseteilseitigen Befestigungselemente um die korrespondierende Befestigungselement-Mittelachse des Filtergehäuseteils.

Ein Querschnitt der Öffnung des Filterelements kann kleiner als wenigstens ein Querschnitt der Öffnung des Filtergehäuseteils sein. Hierbei kann ein Endbereich der Öffnung des Filterelements, welcher einem dem Innenraum zugewandten Endbereich der Öffnung des Filtergehäuseteils zugewandt ist, über der Öffnung des Filtergehäuseteils angeordnet sein, wodurch ein aus der Öffnung des Filterelements strömendes Fluid in die Öffnung des Filtergehäuseteils strömt. Durch den kleineren Querschnitt kann die Öffnung des Filterelements als Trichter wirken. Alternativ können die Öffnungen auch gleich groß sein.

Gemäß einer günstigen Ausgestaltung kann eine Gehäusewand des Filtergehäuseteils Führungselemente umfassen, welche Führungselemente des Filterelements führen, insbesondere wobei die Führungselemente des Filtergehäuseteils und die Führungselemente des Filterelements zur Definition einer eindeutigen Winkelpositionierung des Filterelements gegenüber dem Filtergehäuseteil, an welchem das Filterelement in einem Verwendungszustand anordenbar ist, ausgebildet sind, wobei durch die Führung des Filterelements am Filterelement angeordnete Befestigungselemente und am Filtergehäuseteil angeordnete Befestigungselemente in einem Verwendungszustand zusammen geführt sind. Hierbei können die Führungselemente derart ausgebildet sein, dass das Filterelement nur mit einer bestimmten Ausrichtung in das Filtergehäuseteil eingeführt werden kann. Beispielsweise können ein Führungselement am Filtergehäuseteil und ein Führungselement am Filterelement breiter als andere Führungselemente ausgeführt sein. Durch die Führungselemente kann das Zusammenführen der filterelementseitigen und der gehäuseteilseitigen Befestigungselemente und dadurch das Befestigen des Filterelements am Filtergehäuseteil erleichtert werden.

Nach einem weiteren Aspekt der Erfindung wird eine Verwendung eines Filterelements in einem Filtersystem vorgeschlagen, wobei das Filterelement in einen Innenraum eines Filtergehäuseteils eingeführt wird und so zu dem Filtergehäuseteil ausgerichtet wird, dass die Befestigungselement-Mittelachse des Filterelements, um welche wenigstens zwei filterelementseitige Befestigungselemente konzentrisch angeordnet sind, deckungsgleich zu einer Befestigungselement-Mittelachse des Filtergehäuseteils angeordnet ist, um welche die wenigstens zwei gehäuseteilseitigen Befestigungselemente konzentrisch angeordnet sind. Die wenigstens zwei filterelementseitigen Befestigungselemente werden so zu den wenigstens zwei gehäuseteilseitigen Befestigungselementen ausgerichtet, dass die Befestigungselemente eine Befestigungsanordnung zur lösbaren Befestigung des Filterelements am Filtergehäuseteil ausbilden. Durch die aus filterelementseitigen Befestigungselementen und gehäuseteilseitigen Befestigungselementen gebildete Befestigungsanordnung, kann das Filterelement zuverlässig im Filtergehäuseteil fixiert werden. Diese Fixierung kann zum Entnehmen des Filterelements gelöst werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Figur 1: eine Schnittdarstellung eines unteren Bereichs eines ersten Ausführungsbeispiels eines Filtersystems mit einem Filterelement, einem Filtergehäuseteil und einem Verschlusselement;
- Figur 2: eine weitere Schnittdarstellung des Filtersystems nach Figur 1 entlang der Schnittlinie II;
- Figur 3: eine Schnittdarstellung eines unteren Bereichs eines zweiten Ausführungsbeispiels eines Filtersystems mit einem Filterelement, einem Filtergehäuseteil und einem Verschlusselement;
- Figur 4: eine perspektivische Seitenansicht eines Filtergehäuseteils nach einem Ausführungsbeispiel der Erfindung;
- Figur 5: eine Schnittdarstellung eines dritten Ausführungsbeispiels eines Filtersystems mit einem Filtergehäuseteil nach Figur 4 entlang der Schnittlinie VI;
- Figur 6: eine perspektivische Schnittdarstellung eines Filtergehäuseteils nach einem Ausführungsbeispiel der Erfindung;
- Figur 7: eine perspektivische Ansicht eines Filterelements nach einem Ausführungsbeispiel der Erfindung;
- Figur 8: eine perspektivische Schnittdarstellung eines vierten Ausführungsbeispiels eines Filtersystems mit einem Filtergehäuseteil nach Figur 6 und einem Filterelement nach Figur 7 in einer Zwischenstellung und einem Verschlusselement;
- Figur 9: eine perspektivische Schnittdarstellung eines Filtersystems nach Figur 8 in einem Verwendungszustand;
- Figur 10: eine perspektivische Schnittdarstellung eines fünften Ausführungsbeispiels eines Filtersystems mit einem Filtergehäuseteil nach einem Ausführungsbeispiel der Erfindung und einem Filterelement nach einem Ausführungsbeispiel der Erfindung in einer Zwischenstellung und einem Verschlusselement;
- Figur 11: eine weitere Schnittdarstellung des Filtersystems nach Figur 10;
- Figur 12: eine perspektivische Schnittdarstellung eines sechsten Ausführungsbeispiels eines Filtersystems mit einem Filtergehäuseteil nach einem Ausführungsbeispiel der Erfindung und einem Filterelement nach einem Ausführungsbeispiel der Erfindung in einer Zwischenstellung und einem Verschlusselement;
- Figur 13: eine perspektivische Schnittdarstellung eines siebten Ausführungsbeispiels eines Filtersystems mit einem Filtergehäuseteil nach einem Ausführungsbeispiel der Erfindung und einem Filterelement nach einem Ausführungsbeispiel der Erfindung in einer Zwischenstellung und einem Verschlusselement;
- Figur 14: eine weitere Schnittdarstellung des Filtersystems nach Figur 13.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

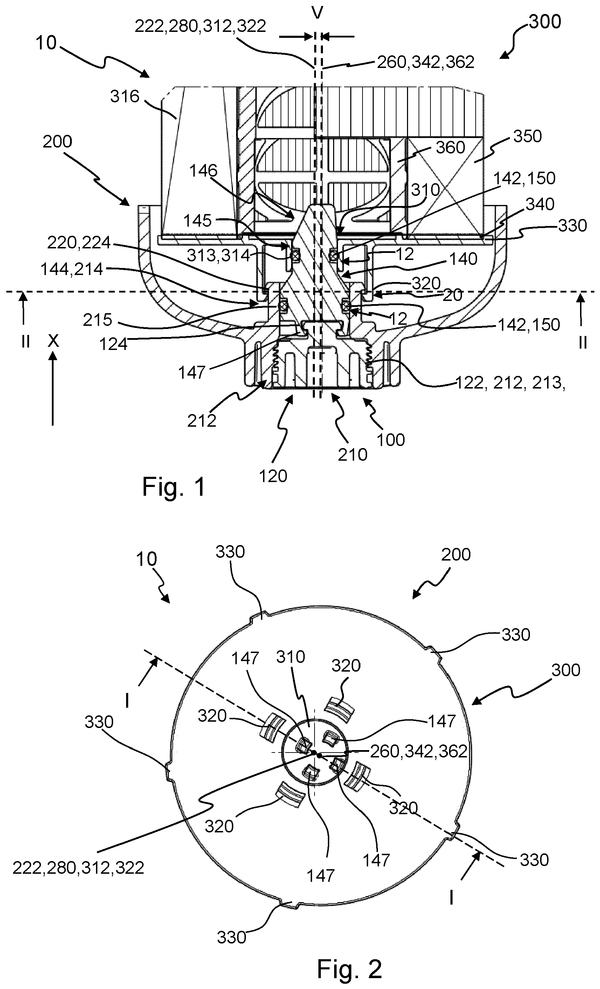

Figur 1 zeigt eine Schnittdarstellung eines unteren Bereichs eines ersten Ausführungsbeispiels eines Filtersystems 10 mit einem Verschlusselement 100, einem Filtergehäuseteil 200 und einem Filterelement 300. Figur 2 zeigt eine weitere Schnittdarstellung dieses Filtersystems 10 entlang der Schnittlinie II-II mit eingezeichneten Kopplungselementen 147 eines Verschlusselements 100.

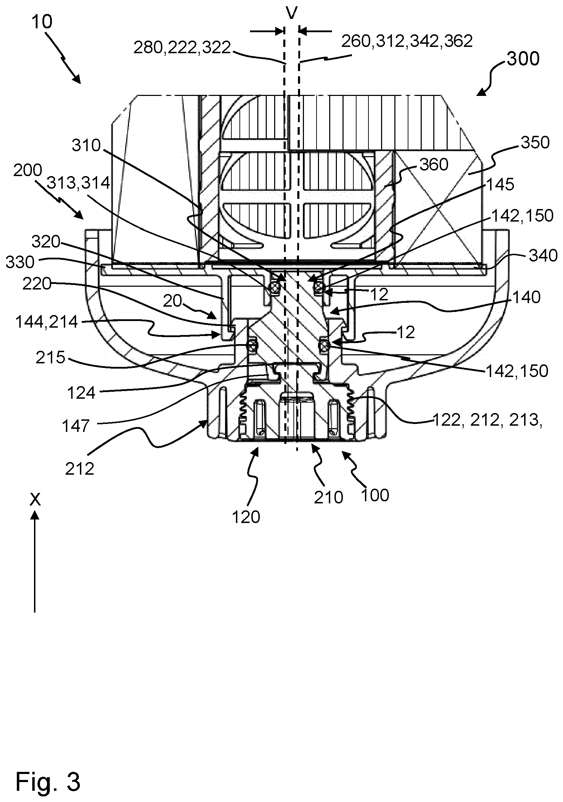

Figur 3 zeigt eine Schnittdarstellung eines unteren Bereichs eines zweiten Ausführungsbeispiels eines Filtersystems 10 mit einem Verschlusselement 100, einem Filtergehäuseteil 200 und einem Filterelement 300.

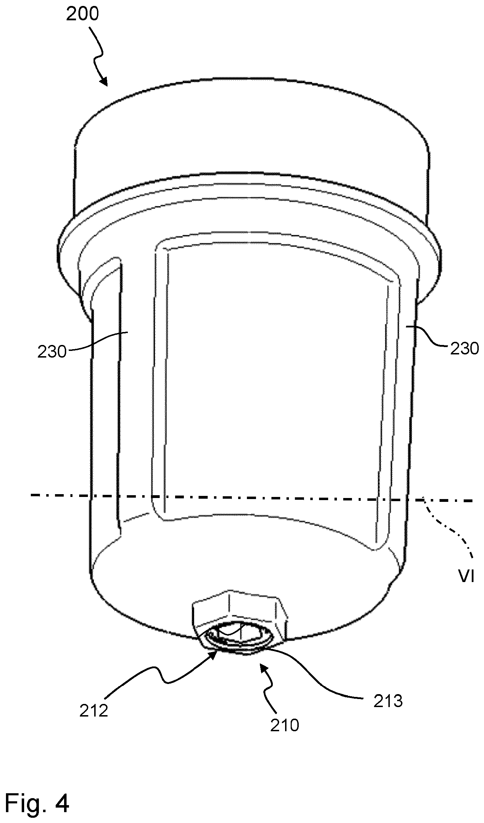

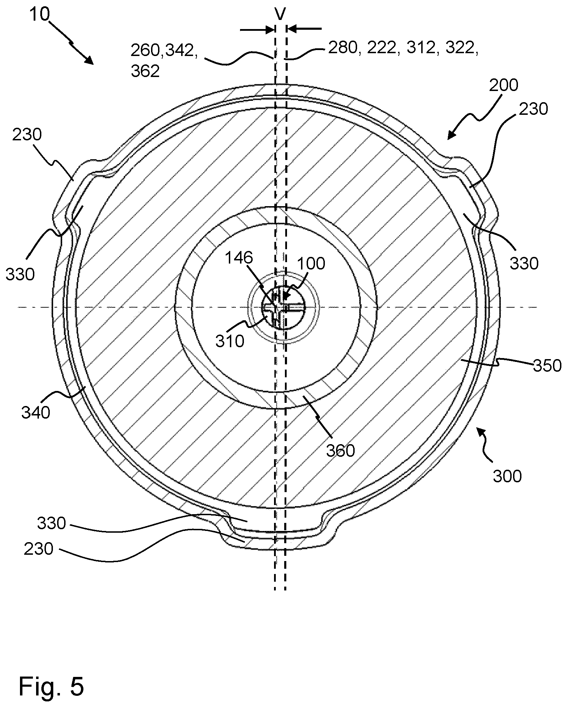

Figur 4 zeigt eine perspektivische Seitenansicht eines Ausführungsbeispiels eines Filtergehäuseteils 200, und Figur 5 zeigt eine Schnittdarstellung eines dritten Ausführungsbeispiels eines Filtersystems 10 mit einem solchen Filtergehäuseteil 200, einem Filterelement 300 und einem Verschlusselement entlang der der Schnittlinie VI.

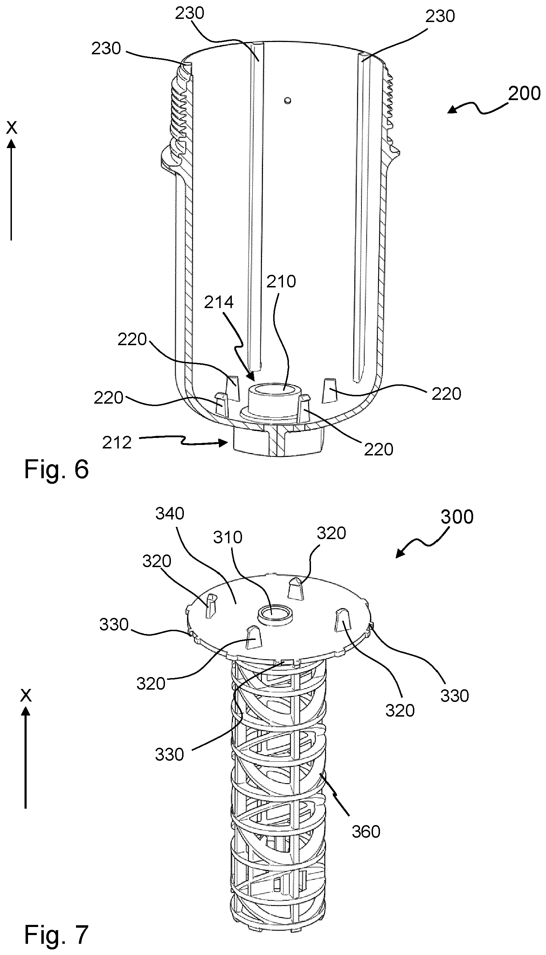

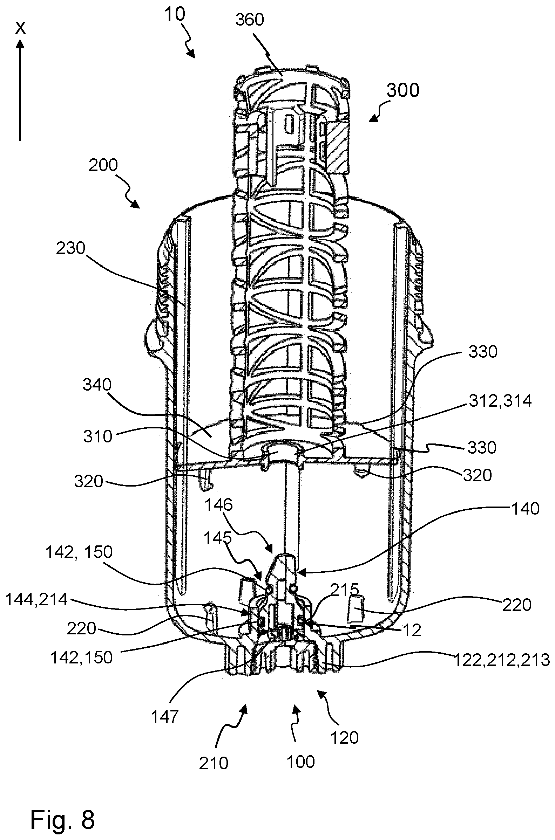

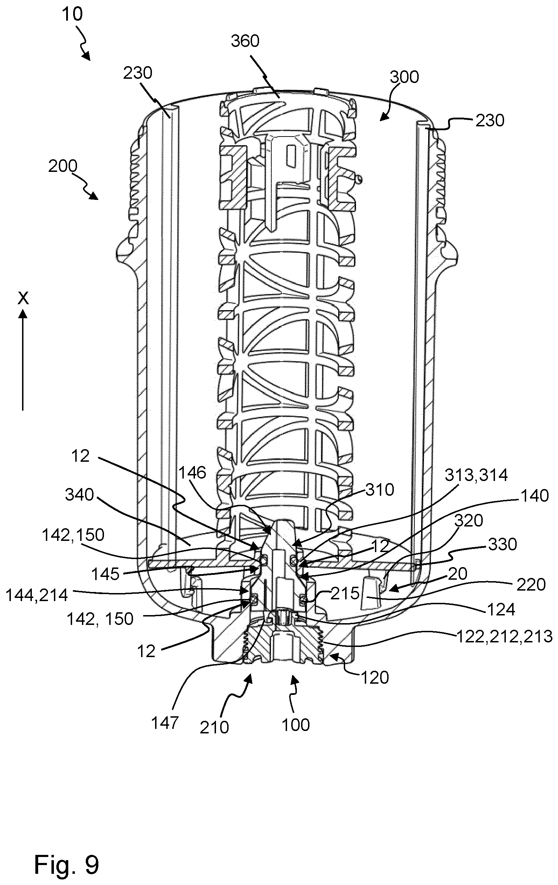

Figur 6 zeigt eine perspektivische Schnittdarstellung eines weiteren Ausführungsbeispiels eines Filtergehäuseteils 200. Figur 7 zeigt eine perspektivische Ansicht eines Ausführungsbeispiels eines Filterelements 300. Figur 8 zeigt eine perspektivische Schnittdarstellung eines vierten Ausführungsbeispiels eines Filtersystems 10 mit einem solchen Filtergehäuseteil 200, einem solchen Filterelement 300 in einer Zwischenstellung und einem Verschlusselement 100. Figur 9 zeigt das Filtersystem 10 in einem Verwendungszustand.

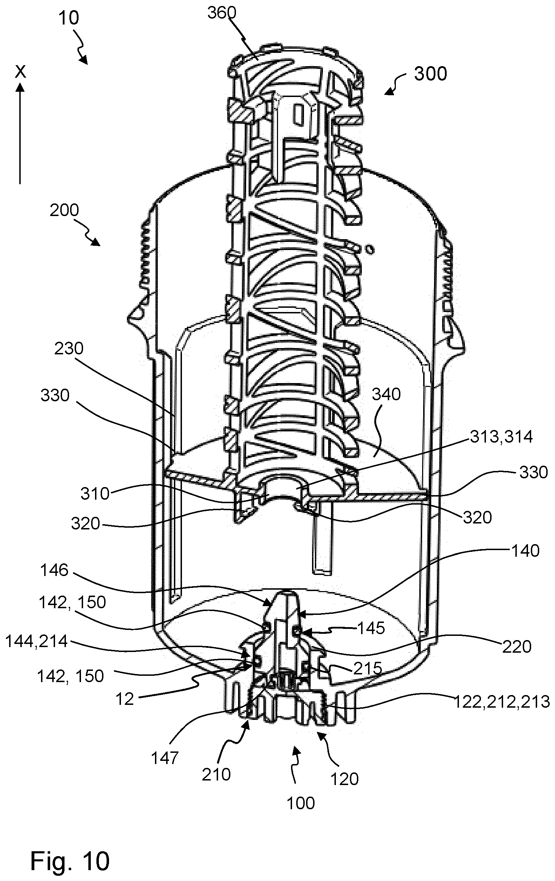

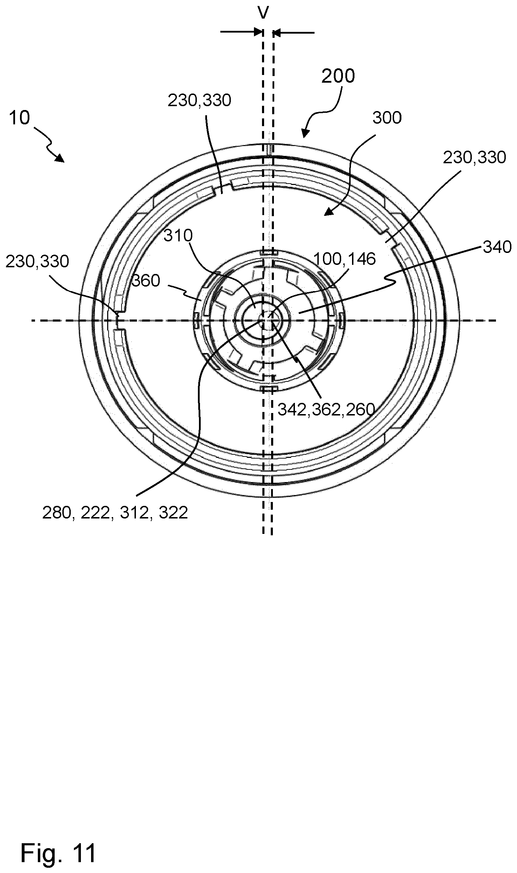

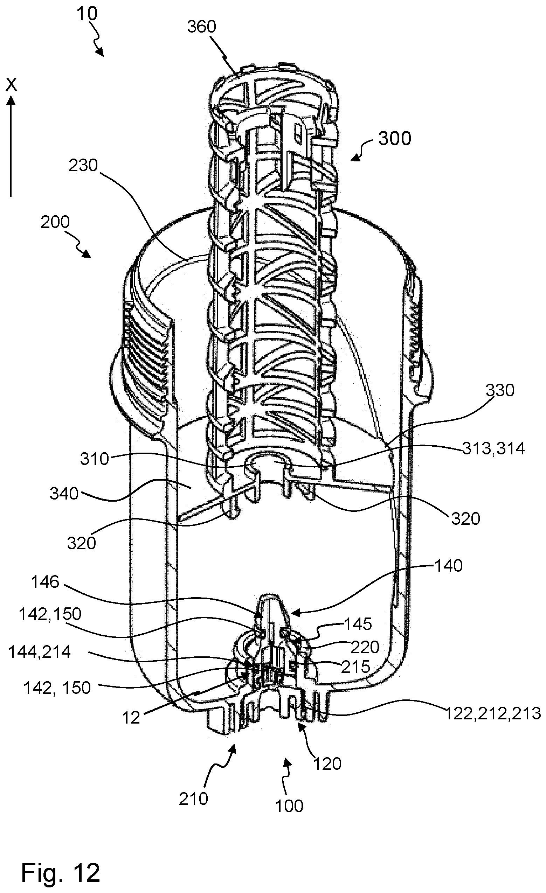

Figur 10 zeigt eine perspektivische Schnittdarstellung eines fünften Ausführungsbeispiels eines Filtersystems 10 mit einem weiteren Ausführungsbeispiel eines Filtergehäuseteils 200, einem weiteren Ausführungsbeispiel eines Filterelements 300 in einer Zwischenstellung und einem Ausführungsbeispiel des Verschlusselements 100. Figur 11 zeigt eine Schnittdarstellung des Filtersystems im Verwendungszustand. Figur 12 zeigt eine perspektivische Schnittdarstellung eines sechsten Ausführungsbeispiels eines Filtersystems 10 mit einem weiteren Ausführungsbeispiel eines Filtergehäuseteils 200, einem weiteren Ausführungsbeispiel eines Filterelements 300 in einer Zwischenstellung und einem Ausführungsbeispiel des Verschlusselements 100.

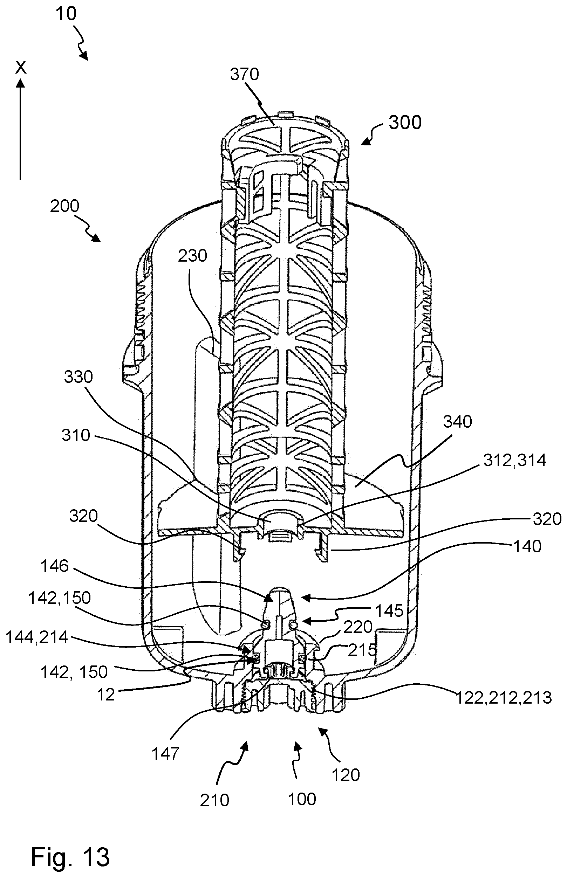

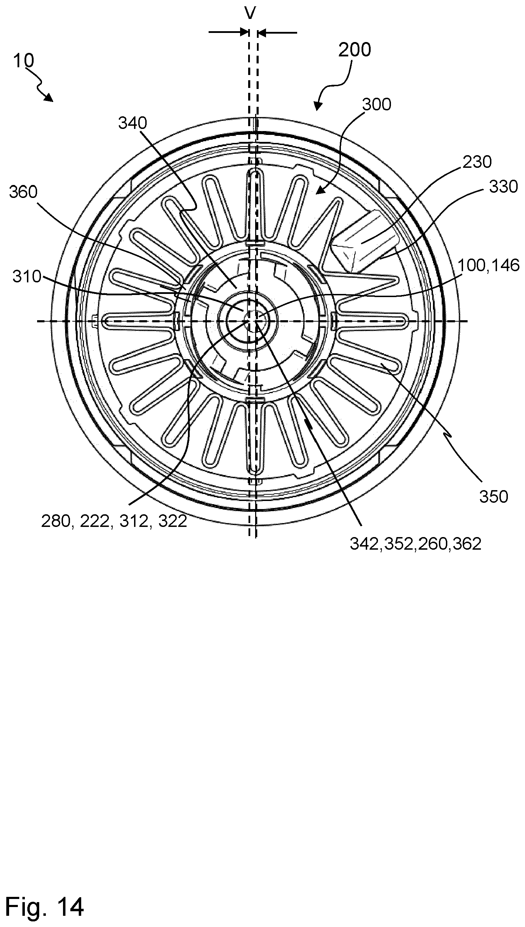

Figur 13 zeigt eine perspektivische Schnittdarstellung eines siebten Ausführungsbeispiels eines Filtersystems 10 mit einem weiteren Ausführungsbeispiel eines Filtergehäuseteils 200, einem weiteren Ausführungsbeispiel eines Filterelements 300 in einer Zwischenstellung und einem Ausführungsbeispiel des Verschlusselements 100. Figur 14 zeigt eine Schnittdarstellung des Filtersystems im Verwendungszustand.

Im Folgenden werden Ausführungsbeispiele eines Filtersystems 10 mit korrespondierenden Ausführungsbeispielen eines Filterelements 300 und korrespondierenden Ausführungsbeispielen des Filtergehäuseteils 200 beschrieben, wobei zunächst auf die Gemeinsamkeiten und im weiteren Verlauf auf die Unterschiede eingegangen wird.

Wie aus Figuren 1-3, 5, 8, 9-14 ersichtlich ist, umfassen die Ausführungsbeispiele des Filtersystems 10 ein Filtergehäuseteil 200, welches einen Innenraum und eine mit dem Innenraum gekoppelte Öffnung 210 umfasst. Ein Verschlusselement 100 verschließt die Öffnung 210 in wenigstens einer ersten Stellung dichtend und gibt in wenigstens einer nicht dargestellten zweiten Stellung die Öffnung 210 zumindest teilweise frei. In der zweiten Stellung des Verschlusselements 100 kann das Verschlusselement 100 einen Durchgang in der Öffnung 210 freigeben, alternativ kann das Verschlusselement 100 außerhalb der Öffnung 210 angeordnet sein, wobei die Öffnung 210 vollständig freigegeben ist.

Im Innenraum des Filtergehäuseteils 200 ist ein Filterelement 300 mit einer Öffnung 310 angeordnet. Ein dem Filtergehäuseteil 200 zugewandter Endbereich der Öffnung 310 des Filterelements 300 ist mit der Öffnung 210 des Filtergehäuseteils 200 fluidisch gekoppelt. Die Öffnungen 310, 210 entsprechen in den dargestellten Ausführungsbeispielen Auslassöffnungen, welche an einem Filtergehäuseteilboden bzw. an einer dem Filtergehäuseteilboden zugewandten Endscheibe 340 angeordnet sind. In einem nicht dargestellten Ausführungsbeispiel können die Öffnungen 210, 310 auch Einlassöffnungen sein, welche an einer Filtergehäuseteildecke und einer der Filtergehäuseteildecke zugewandten Endscheibe 340 angeordnet sind.

In einem nicht dargestellten Ausführungsbeispiel kann das Filtergehäuseteil 200 eine Nut aufweisen, in welche eine korrespondierende Feder des Filterelements 300 im Verwendungszustand eingreift. Die Nut ist umlaufend an einer Gehäusewand angeordnet. Die Feder kann an einem Randbereich einer Endscheibe 340 angeordnet sein Dies kann das Ausrichten und Fixieren des Filterelements 300 am oder im Filtergehäuseteil 200 unterstützen. Zudem kann das Filterelement 300 einfach durch eine Kippbewegung vom Filtergehäuseteil 200 gelöst werden. Die Nut kann entlang der Längsrichtung X an verschiedenen Höhen des Filtergehäuseteils 200 angeordnet sein.

Ein nicht dargestelltes weiteres Filtergehäuseteil kann mit dem dargestellten Filtergehäuseteil 200 ein geschlossenes Filtergehäuse ausbilden. Das nicht dargestellte weitere Filtergehäuseteil kann eine weitere Öffnung aufweisen und kann lösbar mit dem dargestellten Filtergehäuseteil 200 verbunden sein. Durch das zweiteilige Filtergehäuse kann das im Innenraum angeordnete Filterelement 300 bei Bedarf einfach ausgetauscht werden. Das Filtersystem 10 ist als Flüssigkeitsfilter, insbesondere als Kraftstofffilter oder als Ölfilter ausgeführt. Hierbei strömt die zu filternde Flüssigkeit über die Einlassöffnung in das Filtergehäuse, durchströmt das Filterelement 300 und das gefilterte Fluid strömt durch die weitere Öffnung des Filtergehäuseteils aus dem Filtergehäuse. Im Betrieb muss das Verschlusselement 100 zumindest in die Öffnung 210 des Filtergehäuseteils 200 eingebracht werden, wodurch ein Austreten des Fluids aus dem Filtergehäuseteil 200 unterbunden werden kann. Zusätzlich kann das Verschlusselement 100 in die Öffnung 310 des Filterelements 300 eingebracht werden. Zum Entleeren des Filtergehäuseteils 200 kann das Verschlusselement 100 in eine Stellung gebracht werden, die die Öffnung 210 zumindest teilweise freigibt.

Wie aus Figuren 1-3, 5, 8, 9-14 weiter ersichtlich ist, ist das Filterelement 300 lösbar über eine Befestigungsanordnung 20 am Filtergehäuseteil 200 befestigt, wobei die Befestigungsanordnung 20 filterelementseitige Befestigungselemente 320 und mit diesen zusammenwirkende gehäuseteilseitige Befestigungselemente 220 aufweist. Die Verteilung der filterelementseitigen Befestigungselemente 320 am Filterelement 300 ist lediglich durch die Position der Befestigungselemente 220 am Filtergehäuseteil 200 und durch die Ausrichtung des Filterelements 300 am Filtergehäuseteil 200 beschränkt, bzw. durch das Bilden von Paaren aus filterelementseitigen Befestigungselementen 320 und filtergehäuseseitigen Befestigungselementen 220 beschränkt. Hierbei können das Filterelement 300 und das Filtergehäuseteil 200 jeweils zwei, drei, vier oder mehr Befestigungselemente 320, 220 aufweisen, welche eine entsprechende Anzahl Befestigungselementpaare ausbilden. Es ist auch eine Anordnung vorstellbar, bei welcher sich die Anzahl der filterelementseitigen Befestigungselemente 320 von der Anzahl der gehäuseteilseitigen Befestigungselemente 220 unterscheidet.

Wie aus Figuren 1-3, 7-10, 12 und 13 weiter ersichtlich ist, sind die filterelementseitigen Befestigungselemente 320 hakenförmig als Schnapphaken ausgeführt.

Hierbei weisen die hakenförmigen Befestigungselemente 320 einen Hakenschenkel mit beispielsweise rechteckigem oder trapezförmigem Querschnitt auf, wobei insbesondere die Basis des Hakenschenkels einen rechteckigen oder trapezförmigen Querschnitt aufweist, welcher sich zu einem Kopplungsbereich hin verjüngt. Der Hakenschenkel geht in den Kopplungsbereich über. Der Kopplungsbereich weist an einer Unterseite eine Anlagefläche auf, welche von dem Hakenschenkel absteht. Die Anlagefläche ist hierbei der Endscheibe 340 zugewandt, an welcher die Befestigungselemente 320 angeordnet sind. Der Kopplungsbereich kann an einer Oberseite schräg verlaufende Führungsflächen aufweisen. Durch die schrägverlaufenden Führungsflächen weisen die Befestigungselemente 320 einen schmalen oberen Endbereich auf, welcher in drei Schrägen übergeht. Der schmale obere Endbereich der Befestigungselemente 320 ist im Verwendungszustand der Öffnung 210 des Filtergehäuseteils 200 zugewandt.

Die Anlagefläche kann in etwa einen rechten Winkel zum Hakenschenkel aufweisen. Es sind auch kleinere oder größere Winkel möglich.

Die in Figuren 1, 3, 10, 12, 13 dargestellten Ausführungsbeispiele des Filtergehäuseteils 200 weisen gehäuseteilseitige Befestigungselemente 220 auf, welche als Kante mit einer Angriffsfläche ausgebildet sind.

In den dargestellten Ausführungsbeispielen des Filtergehäuseteils 200 weist die Öffnung 210 an einem dem Innenraum zugewandten Endbereich einen durchgängig umlaufenden Kragen auf, welcher die Kanten mit der Angriffsfläche ausbildet, an welchen die filterelementseitigen Schnapphaken eingreifen. In einer alternativen nicht dargestellten Ausgestaltung kann die Gehäusewand wenigstens einen radial in den Innenraum ragenden Vorsprung aufweisen, welcher die Kanten mit der Angriffsfläche ausbildet, an welchen die filterelementseitigen Schnapphaken eingreifen. Die Angriffsfläche ist an der der Endscheibe 340 abgewandten Seite des Vorsprungs oder des Kragens angeordnet.

Die in Figuren 6, 8 und 9 dargestellten Ausführungsbeispiele des Filtergehäuseteils 200 weisen gehäuseteilseitige Befestigungselemente 220 auf, welche als Schnapphaken ausgebildet sind. In den dargestellten Ausführungsbeispielen des Filtergehäuseteils 200 sind diese Schnapphaken am Gehäuseteilboden verteilt. Die gehäuseteilseitige Befestigungselemente 220 sind in den dargestellten Ausführungsbeispielen wie die filterelementseitigen Befestigungselemente 320 ausgeführt. Lediglich die Ausrichtung der gehäuseseitigen Befestigungselemente 220 unterscheidet sich von der Ausrichtung der filterelementseitigen Befestigungselemente 320. In einem alternativen Ausführungsbeispiel können sich die Formen der gehäuseteilseitige Befestigungselemente 220 und der filterelementseitigen Befestigungselemente 320 unterscheiden.

Die filterelementseitigen Schnapphaken wirken paarweise mit gehäuseteilseitigen Schnapphaken oder mit gehäuseteilseitigen Angriffsflächen zusammen und bilden so die Befestigungsanordnung 20 aus. Hierbei liegen die Anlageflächen der Befestigungselemente 220, 320 eines Befestigungselementepaars oder die Anlagefläche und die Angriffsfläche eines Befestigungselementepaars im Verwendungszustand aneinander an und erschweren eine Bewegung des Filterelements 300 in Längsrichtung x.

In einem alternativen nicht dargestellten Ausführungsbeispiel kann das Filterelement 300 den Kragen und das Filtergehäuseteil 200 die Schnapphaken aufweisen. Zudem sind andere geeignete Befestigungselemente 220, 320 vorstellbar. Zudem ist eine Kombination aus Paaren mit Schnapphaken und aus Paaren mit Schnapphaken und Angriffsflächen vorstellbar. Des Weiteren können die Angriffsflächen um Eingriffsöffnungen angeordnet sein, in welche ein Schnapphaken eingreifen kann.

Wie aus Figuren 1, 3, 5, 7, 8-14 weiter ersichtlich ist, umfasst das Filterelement 300 ein Mittelrohr 360, welches ein Filtermedium 350 von innen stützt, und wenigstens eine Endscheibe 340, wobei die wenigstens eine Endscheibe 340 die Öffnung 310 mit wenigstens einer Öffnungs-Mittelachse 312 und wenigstens einem Dichtungsbereich 314 aufweist. In einem alternativen nicht dargestellten Ausführungsbeispiel kann das Filterelement 300 zusätzlich oder alternativ einen Mantel aufweisen, welcher das Filtermedium 350 zumindest teilweise von außen umgibt.

Wie aus Figuren 1, 3, 5, 7-14 weiter ersichtlich ist, sind die Endscheibe 340, die Öffnung 310 der Endscheibe 340 und das Mittelrohr 360 rotationssymmetrisch um eine korrespondierende Mittelachse, nämlich Endscheiben-Mittelachse 342, Mittelrohr-Mittelachse 362, Öffnungs-Mittelachse 312 angeordnet, welche durch den Mittelpunkt des jeweiligen Querschnitts verläuft.

Wie aus Figuren 1, 3, 4, 6, 8-10, 12 und 13 ersichtlich ist, umfasst das Filtergehäuseteil 200 für das Filtersystem 10 den Innenraum und die mit dem Innenraum gekoppelte Öffnung 210. Die Öffnung 210 ist in Längsrichtung X unten am Filtergehäuseteil 200 angeordnet, sodass ein Fluid bei Freigabe der Öffnung 210 durch die Schwerkraft angetrieben aus dem Innenraum strömen kann. Die Öffnung 210 weist zwei in Längsrichtung X hintereinander angeordnete Abschnitte 212, 214 auf. Ein Verbindungsabschnitt 212 weist eine in Längsrichtung X verlaufende Verbindungsabschnitts-Mittelachse 260 auf. Ein Dichtungsabschnitt 214 weist eine in Längsrichtung X verlaufende Dichtungsabschnitts-Mittelachse 280 und einen Dichtungsbereich 215 auf. Die Verbindungsabschnitts-Mittelachse 260 des Verbindungsabschnitts 212 ist versetzt zur Dichtungsabschnitts-Mittelachse 280 des Dichtungsabschnitts 214 angeordnet. Hierbei entspricht der Achsenversatz v der beiden Mittelachsen 260, 280 der Öffnung 210 dem Achsenversatz v eines korrespondierenden Verschlusselements 100, welches in die Öffnung 210 einführbar ist und in wenigstens einer ersten Stellung die Öffnung 210 dichtend verschließt. In einem alternativen nicht dargestellten Ausführungsbeispiel können die Dichtungsabschnitts-Mittelachse 280 des Dichtungsabschnitts 214 und die Verbindungsabschnitts-Mittelachse 260 des Verbindungsabschnitts 212 deckungsgleich zueinander angeordnet sein.

Unter einem Verschlusselement 100 wird ein Bauteil verstanden, welches in wenigstens eine Öffnung 210, 310 des Filtersystems 10 einführbar ist und diese im eingeführten Zustand in wenigstens einer ersten Stellung dichtend verschließt. Hierbei ist das Verschlusselement 100 lösbar mit der wenigstens einen Öffnung 210, 310 verbunden. Das Verschlusselement 100 weist ein Verbindungssegment 120 und ein Verschlusssegment 140 auf.

Unter einem Verschlusssegment 140 wird ein Segment verstanden, welches in der wenigstens einen ersten Stellung des Verschlusselements 100 wenigstens eine der Öffnungen 210, 310 des Filtersystems 10 dichtend verschließen kann. Zu diesem Zweck kann ein Dichtungselement 150 bzw. können Dichtungselemente 150 zwischen einem korrespondierenden Dichtungsbereich 142 des Verschlusssegments 140 und einem Dichtungsbereich 215, 314 eines Dichtungsabschnitts 214, 313 der Öffnung 210, 310 angeordnet sein und eine Dichtungsanordnung 12 ausbilden.

Unter einem Verbindungssegment 120 wird ein Segment verstanden, welches mit einem Verbindungsabschnitt 212 der Öffnung 210 lösbar verbunden werden kann. Hierbei ragt ein erster Abschnitt 144 in den Dichtungsabschnitt 214 der Öffnung 210. Ist eines der Ausführungsbeispiele der Verschlusselements 100 mit einem zweiten Abschnitt 145 oder einem zweiten Abschnitt 145 und einem dritten Abschnitt 146 in der Öffnung 210 angeordnet, dann ragt der zweite Abschnitt 145 bzw. ragen der zweite Abschnitt 145 und der dritte Abschnitt 146 in der wenigstens einen ersten Stellung zumindest teilweise in den Innenraum des Filtergehäuseteils 200. Hierbei können die Abschnitte 145, 146 in eine Öffnung 310 des Filterelements 300 ragen, welche in den Innenraum ragt.

Wie aus Figuren 1-3, 5-14 weiter ersichtlich ist, ist ein Querschnitt der Öffnung 310 des Filterelements 300 kleiner oder gleich als der Querschnitt des Dichtungsabschnitts 214 bzw. als der Querschnitt des dem Innenraum zugewandten Endbereich des Dichtungsabschnittes 214 der Öffnung 210 des Filtergehäuseteils 200. Hierbei kann die Öffnung 310 des Filterelements 300 als Trichter wirken und kann das Fluid in die Öffnung 210 des Filtergehäuseteils 200 leiten.

Wie aus Figuren 1-3, 5, 7-14 weiter ersichtlich ist, umfassen die dargestellten Ausführungsbeispiele des Filterelements 300 die Endscheibe 340, an welcher wenigstens zwei filterelementseitige Befestigungselemente 320 angeordnet sind. Die wenigstens zwei filterelementseitigen Befestigungselemente 320 sind konzentrisch um dieselbe in Längsrichtung X verlaufende Befestigungselement-Mittelachse 322 des Filterelements 300 angeordnet. Diese Befestigungselement-Mittelachse 322 des Filterelements 300 ist versetzt zu wenigstens einer weiteren in Längsrichtung x verlaufenden Filterelement-Mittelachse 312, 342, 362 des Filterelements 300 oder versetzt zu wenigstens einer in Längsrichtung X verlaufenden Filtergehäuseteil-Mittelachse 260, 280 des Filtergehäuseteils 200, an welchem das Filterelement 300 im Verwendungszustand angeordnet ist, angeordnet. Alternativ kann die Befestigungselement-Mittelachse 322 des Filterelements 300, um welche die wenigstens zwei filterelementseitigen Befestigungselemente 320 konzentrisch angeordnet sind, versetzt zu wenigstens einer der weiteren in Längsrichtung x verlaufenden Filterelement-Mittelachsen 312, 342, 362 des Filterelements 300 und versetzt zu wenigstens einer in Längsrichtung X verlaufenden Filtergehäuseteil-Mittelachse 260, 280 des Filtergehäuseteils 200 angeordnet sein. Die wenigstens zwei filterelementseitigen Befestigungselemente 320 weisen einen unterschiedlichen radialen Abstand zu der wenigstens einen der Mittelachsen 312, 342, 362, 260, 280 auf, zu welcher die Befestigungselement-Mittelachse 322 des Filterelements 300, um welche die filterelementseitigen Befestigungselemente 320 angeordnet sind, versetzt ist.

Wie aus Figur 14 weiter ersichtlich ist, ist das Filtermedium 350 im dargestellten Ausführungsbeispiel zu einem insbesondere sternförmigen Faltenbalg plissiert, insbesondere wobei bevorzugt die weitere Mittelachse 312, 342, 352, 362, 260, 280, zu der die Befestigungselement-Mittelachse 322 des Filterelements 300 versetzt ist, eine Faltenbalg-Mittelachse 352 des Faltenbalgs ist. Hierbei kann die "Zentralmittelachse" des Filterelements 300 durch die Faltenbalg-Mittelachse 352 des Faltenbalgs definiert sein, da dieser bevorzugt mit umlaufend gleichen Faltenhöhen ausgeführt werden kann.

Wie aus Figuren 1-3, 5, 7-14 weiter ersichtlich ist, umfasst die Endscheibe 340 eine Öffnung 310 mit wenigstens einer in Längsrichtung X verlaufenden Öffnungs-Mittelachse 312. Die Öffnung 310 kann mittig oder außermittig an der Endscheibe 340 angeordnet sein.

Wie aus Figur 3 weiter ersichtlich ist, ist in dem dargestellten Ausführungsbeispiel die weitere Mittelachse 312, 342, 362, 260, 280, zu der die Befestigungselement-Mittelachse 322 des Filterelements 300 radial versetzt ist, die Öffnungs-Mittelachse 312 der Öffnung 310. Optional können drei, vier oder mehr filterelementseitigen Befestigungselemente vorhanden sein.

Wie aus Figuren 1, 3, 6, 8-10, 12 und 13 weiter ersichtlich ist, umfasst das Filtergehäuseteil 200 für das Filtersystem 10 wenigstens zwei gehäuseteilseitige Befestigungselemente 220, welche konzentrisch um dieselbe in Längsrichtung X verlaufende Befestigungselement-Mittelachse 222 des Filtergehäuseteils 200 angeordnet sind. Die Befestigungselement-Mittelachse 222 ist versetzt zu wenigstens einer weiteren in Längsrichtung X verlaufenden Filtergehäuseteil-Mittelachse 260, 280 des Filtergehäuseteils 200 oder versetzt zu wenigstens einer in Längsrichtung X verlaufenden Filterelement-Mittelachse 312, 342, 362 des Filterelements 300, welches in einem Verwendungszustand im Innenraum angeordnet ist, angeordnet. Alternativ kann die Befestigungselement-Mittelachse 222 des Filtergehäuseteils 200, um welche die gehäuseteilseitigen Befestigungselemente 220 konzentrisch angeordnet sind, versetzt zu wenigstens einer der weiteren in Längsrichtung X verlaufenden Filtergehäuseteil-Mittelachsen 260, 280 des Filtergehäuseteils 200 und versetzt zu wenigstens einer der in Längsrichtung X verlaufenden Filterelement-Mittelachsen 312, 342, 362 des Filterelements 300 angeordnet sein. Die wenigstens zwei gehäuseteilseitigen Befestigungselemente 220 weisen einen unterschiedlichen radialen Abstand zu der wenigstens einen Mittelachse 312, 342, 362, 260, 280 auf, zu welcher die Befestigungselementepaars-Mittelachse 222 des Filtergehäuseteils 200, um welche die gehäuseteilseitigen Befestigungselemente 220 angeordnet sind, versetzt ist. Die Befestigungselement-Mittelachse 322 des Filterelements 300, um welche die wenigstens zwei filterelementseitigen Befestigungselemente 320 konzentrisch angeordnet sind, ist im Verwendungszustand deckungsgleich zur Befestigungselement-Mittelachse 222 des Filtergehäuseteils 200 angeordnet, um welche die wenigstens zwei gehäuseteilseitigen Befestigungselemente 220 konzentrisch angeordnet sind.

Das in Figur 1 und 2 dargestellte erste Ausführungsbeispiel der Filteranordnung umfasst ein Ausführungsbeispiel des Filterelements 300, bei welchem die Öffnung 310 des Filterelements 300 leicht versetzt an der Endscheibe 340 angeordnet ist. Hierbei ist die Öffnungs-Mittelachse 312 der Öffnung 310 versetzt zur Endscheiben-Mittelachse 342 der Endscheibe 340 angeordnet. Das Mittelrohr 360 ist mittig an der Endscheibe 340 angeordnet, wobei die Mittelrohr-Mittelachse 362 des Mittelrohrs 360 und die Endscheiben-Mittelachse 342 der Endscheibe 340 deckungsgleich angeordnet sind. Dadurch sind das Mittelrohr 360 und die Öffnung 310 ebenfalls versetzt zueinander angeordnet.

Wie aus Figur 1 weiter ersichtlich ist, ist das Filterelement 300 mittig im Innenraum des Filtergehäuseteils 200 angeordnet. In einem alternativen, nicht dargestellten Ausführungsbeispiel können die Mittelachsen 362, 312 des Mittelrohrs 360 und der Öffnung 310 auch deckungsgleich zu einander angeordnet sein. Zudem ist eine versetzte Anordnung der Mittelachsen 362, 312, 342 des Mittelrohrs 360, der Öffnung 310 und der Endscheibe 340 vorstellbar, wobei die Öffnung 310 und das Mittelrohr 360 nicht mittig an der Endscheibe 340 angeordnet sind. Die Befestigungselement-Mittelachse 322 des Filterelements 300, um welche die wenigstens zwei filterelementseitigen Befestigungselemente 320 konzentrisch angeordnet sind, ist im dargestellten Ausführungsbeispiel deckungsgleich zur Öffnungs-Mittelachse 312 und versetzt zur Endscheiben-Mittelachse 342 und versetzt zur Mittelrohr-Mittelachse 362 angeordnet. Die filterelementseitigen Befestigungselemente 320 weisen im dargestellten Ausführungsbeispiel denselben radialen Abstand zur Befestigungselement-Mittelachse 322 des Filterelements 300 und dadurch denselben Abstand zum Rand der Öffnung 310 auf. Die filterelementseitigen Befestigungselemente 320 weisen einen unterschiedlichen radialen Abstand zum Mittelpunkt des Mittelrohrs 360 und zum Mittelpunkt der Endscheibe 340 auf. Hierbei ist im dargestellten Ausführungsbeispiel der Abstand zwischen dem rechten filterelementseitigen Befestigungselement 320 und der Endscheiben-Mittelachse 342 der Endscheibe 340 kleiner als der Abstand zwischen dem linken filterelementseitigen Befestigungselement und Endscheiben-Mittelachse 342 der Endscheibe 340. In einem alternativen nicht dargestellten Ausführungsbeispiel kann die Befestigungselement-Mittelachse 322 des Filterelements 300, um welche die wenigstens zwei filterelementseitigen Befestigungselemente 320 konzentrisch angeordnet sind, ebenfalls versetzt zur Öffnungs-Mittelachse 312 angeordnet sein. Zudem ist eine deckungsgleiche Anordnung zur Endscheiben-Mittelachse 342 und/oder zur Mittelrohr-Mittelachse 362 möglich.

Wie aus Figur 1 und 2 weiter ersichtlich ist, ist die Befestigungselement-Mittelachse 322 des Filterelements 300, um welche die wenigstens zwei filterelementseitigen Befestigungselemente 320 konzentrisch angeordnet sind, versetzt zur Verbindungsabschnitts-Mittelachse 260 des Verbindungsabschnitts 212 der Öffnung 210 des Filtergehäuseteils 200 angeordnet. Die Befestigungselement-Mittelachse 322 des Filterelements 300, um welche die wenigstens zwei filterelementseitigen Befestigungselemente 320 konzentrisch angeordnet sind, ist deckungsgleich zur Dichtungsabschnitts-Mittelachse 280 des Dichtungsabschnitts 214 der Öffnung 210 des Filtergehäuseteils 200 angeordnet.

Da die Befestigungselement-Mittelachse 222 des Filtergehäuseteils 200, um welche die wenigstens zwei gehäuseteilseitigen Befestigungselemente 220 konzentrisch angeordnet sind, deckungsgleich zur Befestigungselement-Mittelachse 322 des Filterelements 300, um welche die wenigstens zwei filterelementseitigen Befestigungselemente 320 konzentrisch angeordnet sind, angeordnet ist, weist die Befestigungselement-Mittelachse 222 des Filtergehäuseteils 200, um welche die wenigstens zwei gehäuseteilseitigen Befestigungselemente 220 konzentrisch angeordnet sind, denselben Achsenversatz v zu den anderen Mittelachsen 260, 280, 312, 342, 362 des Filtersystems 10 auf wie die Befestigungselement-Mittelachse 322 des Filterelements 300, um welche die wenigstens zwei filterelementseitigen Befestigungselemente 320 konzentrisch angeordnet sind.

Wie aus Figur 1 und 2 weiter ersichtlich ist, sind die filterelementseitigen Befestigungselemente 320 mit gleichem radialem Abstand zur Befestigungselement-Mittelachse 322 des Filterelements 300 angeordnet. Zudem sind die filterelementseitigen Befestigungselemente 320 voneinander mit gleichem Bogenmaß und Gradmaß beabstandet. Des Weiteren sind die filterelementseitigen Befestigungselemente 320 achsensymmetrisch und rotationssymmetrisch zur Befestigungselement-Mittelachse 322 des Filterelements 300 angeordnet. Die filterelementseitigen Befestigungselemente 320 ragen von der Endscheibe 340 in einen Freiraum zwischen der Endscheibe 340 und dem Gehäuseboden.

Wie aus Figuren 1 und 2 weiter ersichtlich ist, weist die Öffnung 210 des dargestellten Ausführungsbeispiels des Filtergehäuseteils 200 einen in den Freiraum zwischen der Endscheibe 340 und dem Gehäuseboden ragenden Endbereich auf, welcher den Kragen umfasst. Der Kragen und der Endbereich weisen einen runden Querschnitt auf, welcher um die Dichtungsabschnitts-Mittelachse 280 des Dichtungsabschnitts 214 verläuft. Dadurch sind die am Kragen angeordneten Kanten mit als Befestigungselement 220 ausgebildeten Angriffsflächen an der Unterseite des Kragens mit gleichem radialem Abstand zur Befestigungselement-Mittelachse 222 des Filtergehäuseteils 200 angeordnet. Zudem sind die gehäuseteilseitigen Befestigungselemente 220 mit gleichem Bogenmaß und Gradmaß voneinander beabstandet. Zudem sind gehäuseteilseitige Befestigungselemente 222 achsensymmetrisch und rotationssymmetrisch zur Befestigungselement-Mittelachse 222 des Filtergehäuseteils 200 angeordnet.

Wie aus Figur 1 und 2 weiter ersichtlich ist, sind die filterelementseitigen Befestigungselemente 320 hakenförmig ausgebildet. Die Hakenspitzen verlaufen jeweils radial von außen nach innen. Die Rasthaken greifen im Verwendungszustand an den Angriffsflächen ein.

Wie aus Figur 2 weiter ersichtlich ist, sind die filterelementseitigen Befestigungselemente 320 und die gehäuseteilseitigen Befestigungselementen 220 versetzt zu Kopplungselementen 147, 124 des in die Öffnungen 210, 310 ragenden Verschlusselements 100 angeordnet.

Wie aus Figur 2 weiter ersichtlich ist, umfasst das dargestellte Filterelement 300 fünf vom Rand der Endscheibe 340 abstehende Führungselemente 330, welche in korrespondierenden Führungselementen 230, welche als radiale Einbuchtung an einem Innenumfang einer Gehäusewand ausgebildet sind, des Filtergehäuseteils führbar sind. Alternativ ist auch eine Ausführung als radiale Auskragung vorstellbar. Es ist auch eine andere Anzahl von Führungselementen 230, 330 vorstellbar. Durch die Führungselemente 230, 330 kann das Filterelement 300 in den Verwendungszustand geführt werden, und am Filterelement 300 angeordnete Befestigungselemente 320 und an dem Filtergehäuseteil 200 angeordnete Befestigungselemente 220 können zusammengeführt werden, und die Öffnung 310 des Filterelements 300 kann mit der Öffnung 210 des Filtergehäuseteils 200 fluidisch gekoppelt werden. Zudem kann die Ausrichtung der Öffnung 310 des Filterelements 300 zu einem zweiten Abschnitt 145 des Verschlusselements 100 durch die Führung erfolgen. Zudem ist durch die Führungselemente 230 des Filtergehäuseteils 200 und die Führungselemente 330 des Filterelements 300 eine Definition einer eindeutigen Winkelpositionierung des Filterelements 300 gegenüber dem Filtergehäuseteil 200, an welchem das Filterelement 300 in einem Verwendungszustand anordenbar ist möglich.

Das in Figur 3 dargestellte zweite Ausführungsbeispiel der Filteranordnung 10 unterscheidet sich im Wesentlichen von dem in Figuren 1 und 2 dargestellten ersten Ausführungsbeispiel der Filteranordnung 10 dadurch, dass die Öffnung 310 des Filterelements exzentrisch zu dem dem Innenraum zugewandten Dichtungsabschnitt 214 der Öffnung 210 des Filtergehäuseteils 200 angeordnet ist. Hierbei ist die Öffnungs-Mittelachse 312, der Öffnung 310 versetzt zur Dichtungsabschnitts-Mittelachse 280 des Dichtungsabschnitts 214 angeordnet.

Wie aus Figur 3 weiter ersichtlich ist, ist das Filterelement 300 mittig im Innenraum des Filtergehäuseteils 200 angeordnet.

Wie aus Figur 3 weiter ersichtlich ist, sind im dargestellten Ausführungsbeispiel des Filterelements 300 das Mittelrohr 360 und Öffnung 310 mittig an der Endscheibe 340 angeordnet. Die Mittelachsen 362, 312 des Mittelrohrs 360 und der Öffnung 310 sind deckungsgleich zueinander und deckungsgleich zur Endscheiben-Mittelachse 342 der Endscheibe 340 angeordnet. Die Befestigungselement-Mittelachse 322 des Filterelements 300, um welche die wenigstens zwei filterelementseitigen Befestigungselemente 320 konzentrisch angeordnet sind, ist im dargestellten Ausführungsbeispiel versetzt zu den Mittelachsen 362, 342, 312 des Mittelrohrs 360, der Endscheibe 340 und der Öffnung 310 angeordnet. Hierbei ist im dargestellten Ausführungsbeispiel der Abstand zwischen dem rechten filterelementseitigen Befestigungselement 320 und den deckungsgleichen Mittelachsen 362, 342, 312 des Mittelrohrs 360, der Endscheibe 340 und der Öffnung 310 kleiner als der Abstand zwischen dem linken filterelementseitigen Befestigungselement 320 und den deckungsgleichen Mittelachsen 362, 342, 312 des Mittelrohrs 360, der Endscheibe 340 und der Öffnung 310.

Wie aus Figur 3 weiter ersichtlich ist, ist die Befestigungselement-Mittelachse 322 des Filterelements 300, um welche die wenigstens zwei filterelementseitigen Befestigungselemente 320 konzentrisch angeordnet sind, versetzt zur Verbindungsabschnitts-Mittelachse 260 des Verbindungsabschnitts 212 der Öffnung 210 des Filtergehäuseteils 200 angeordnet. Die Befestigungselement-Mittelachse 322 des Filterelements 300, um welche die wenigstens zwei filterelementseitigen Befestigungselemente 320 konzentrisch angeordnet sind, ist deckungsgleich zur Dichtungsabschnitts-Mittelachse 280 des Dichtungsabschnitts 214 der Öffnung 210 des Filtergehäuseteils 200 angeordnet.

Da die Befestigungselement-Mittelachse 222 des Filtergehäuseteils 200, um welche die wenigstens zwei gehäuseteilseitigen Befestigungselemente 220 konzentrisch angeordnet sind, deckungsgleich zur Befestigungselement-Mittelachse 322 des Filterelements 300, um welche die wenigstens zwei filterelementseitigen Befestigungselemente 320 konzentrisch angeordnet sind, angeordnet ist, weist die Befestigungselement-Mittelachse 222 des Filtergehäuseteils 200, denselben Achsenversatz v zu den anderen Mittelachsen 260, 280, 312, 342, 362 des Filtersystems 10 auf, wie die Befestigungselement-Mittelachse 322 des Filterelements 300.

In Figur 4 ist eine Außenansicht eines Ausführungsbeispiels des Filtergehäuseteils 200 dargestellt, welche Führungselemente 230 von außen zeigt. Zudem ist die Öffnung 210 freigegeben. Der Verbindungsabschnitt 212 der Öffnung 210 umfasst im dargestellten Ausführungsbeispiel ein als Innengewinde ausgebildetes Verbindungselement 213, welches mit einem als Außengewinde ausgeführten Verbindungselement 122 (Figuren 1,3, 8-12,13) des Verbindungssegments 120 des Verschlusselements 100 eine lösbare Verbindung ausbilden kann.

Figur 5 zeigt eine Schnittdarstellung des dritten Ausführungsbeispiels des Filtersystems 10 entlang der Schnittlinie VI aus Figur 4. Hierbei ist in dem Filtergehäuseteil 200 ein Filterelement 300 angeordnet. In den Öffnungen 210, 310 ist ein Verschlusselement 100 angeordnet. Das Filterelement 300 weist Führungselemente 330 auf, welche von einem Rand der Endscheibe 340 radial nach außen abstehen. Diese Führungselemente 330 werden von den Führungselementen 230 des Filtergehäuseteils 200 geführt. Zudem ist durch die Führungselemente 230 des Filtergehäuseteils 200 und die Führungselemente 330 des Filterelements 300 eine Definition einer eindeutigen Winkelpositionierung des Filterelements 300 gegenüber dem Filtergehäuseteil 200, an welchem das Filterelement 300 in einem Verwendungszustand anordenbar ist möglich.

Das in Figur 5 dargestellte dritte Ausführungsbeispiel der Filteranordnung umfasst ebenfalls ein Filterelement 300, das mittig im Filtergehäuse angeordnet ist. Zudem ist im dargestellten Ausführungsbeispiel des Filterelements 300 das Mittelrohr 360 mittig an der Endscheibe 340 angeordnet. Die Mittelachsen 342, 362 der Endscheibe 340 und des Mittelrohrs 360 sind deckungsgleich zueinander angeordnet.

Wie aus Figur 5 weiter ersichtlich ist, ist die Öffnung 310 exzentrisch zum Mittelrohr 360 und zur Endscheibe 340 angeordnet. Hierbei ist die Öffnungs-Mittelachse 312 der Öffnung 310 versetzt zu den Mittelachsen 342, 362 der Endscheibe 340 und des Mittelrohrs 360 angeordnet.

Die Befestigungselement-Mittelachse 322 des Filterelements 300, um welche die wenigstens zwei nicht dargestellten filterelementseitigen Befestigungselemente 320 konzentrisch angeordnet sind, ist im dargestellten Ausführungsbeispiel versetzt zu den Mittelachsen 362, 342 des Mittelrohrs 360 und der Endscheibe 340 angeordnet. Die Befestigungselement-Mittelachse 322 des Filterelements 300, um welche die wenigstens zwei nicht dargestellten filterelementseitigen Befestigungselemente 320 konzentrisch angeordnet sind, ist zudem versetzt zur Verbindungsabschnitts-Mittelachse 260 des Verbindungsabschnitts 212 der Öffnung 210 des Filtergehäuseteils 200 angeordnet. Die Befestigungselement-Mittelachse 322 des Filterelements 300, um welche die wenigstens zwei nicht dargestellten filterelementseitigen Befestigungselemente 320 konzentrisch angeordnet sind, ist deckungsgleich zur Dichtungsabschnitts-Mittelachse 280 des Dichtungsabschnitts 214 der Öffnung 210 des Filtergehäuseteils 200 und deckungsgleich zur Öffnungs-Mittelachse 312 der Öffnung 310 des Filterelements 300 angeordnet. Die Öffnung 310 des Filterelements 300 ist koaxial zum Dichtungsabschnitt 214 der Öffnung 210 des Filtergehäuseteils 200 angeordnet. Dadurch ist die Befestigungselement-Mittelachse 322 des Filterelements 300, um welche die wenigstens zwei filterelementseitigen Befestigungselemente 320 konzentrisch angeordnet sind, deckungsgleich zur Dichtungsabschnitts-Mittelachse 280 des Dichtungsabschnitts 214 der Öffnung 210 des Filtergehäuseteils 200 angeordnet. Es sind auch andere Anordnungen vorstellbar.

Da die Befestigungselement-Mittelachse 222 des Filtergehäuseteils 200, um welche die wenigstens zwei gehäuseteilseitigen Befestigungselemente 220 konzentrisch angeordnet sind, deckungsgleich zur Befestigungselement-Mittelachse 322 des Filterelements 300, um welche die wenigstens zwei filterelementseitigen Befestigungselemente 320 konzentrisch angeordnet sind, angeordnet ist, weist die Befestigungselement-Mittelachse 222 des Filtergehäuseteils 200, um welche die wenigstens zwei gehäuseteilseitigen Befestigungselemente 220 konzentrisch angeordnet sind, denselben Achsenversatz v zu den anderen Mittelachsen 260, 280, 312, 342, 362 des Filtersystems 10 auf, wie die Befestigungselement-Mittelachse 322 des Filterelements 300, um welche die wenigstens zwei filterelementseitigen Befestigungselemente 320 konzentrisch angeordnet sind.

Wie aus Figur 5 ersichtlich ist, ist ein Führungselement 330 des Filterelements 300 breiter ausgeführt als die beiden anderen Führungselemente 330. Das Filtergehäuseteil 200 weist ein korrespondierendes breiteres Führungselement 230 und zwei schmalere Führungselemente 230 auf, dadurch kann die Ausrichtung des Filterelements 300 im Filtergehäuseteil 200 und die Ausrichtung der Öffnung 310 des Filterelements 300 zur Öffnung 210 des Filtergehäuseteils 200 oder die Ausrichtung der filterelementseitigen Befestigungselemente 320 zu den gehäuseteilseitigen Befestigungselementen 220 vorgegeben werden. Es sind auch andere Führungselemente 230, 330 und andere Anordnungen vorstellbar. Durch die Führungselemente 230, 330 kann sichergestellt werden, dass die Befestigungselement-Mittelachse 322 des Filterelements 300, um welche die wenigstens zwei filterelementseitigen Befestigungselemente 320 angeordnet sind, deckungsgleich zur Befestigungselement-Mittelachse 222 des Filtergehäuseteils 200 ist, um welche die wenigstens zwei gehäuseteilseitigen Befestigungselemente 220 konzentrisch angeordnet sind.

Das in Figuren 6 bis 9 dargestellte vierte Ausführungsbeispiel der Filteranordnung 10 unterscheidet sich im Wesentlichen von dem in den Figuren 1 bis 5 dargestellten Ausführungsbeispielen der Filteranordnung 10 dadurch, dass die gehäuseteilseitigen Befestigungselemente 220 ebenfalls hakenförmig ausgebildet sind. Die hakenförmigen gehäuseteilseitigen Befestigungselemente 220 sind im dargestellten Ausführungsbeispiel an einem Boden des Filtergehäuseteils 200 angeordnet und ragen in einen Freiraum zwischen der Endscheibe 340 des Filterelements und dem Boden. Dadurch kann Befestigungselement-Mittelachse 222 des Filtergehäuseteils 200, um welche die gehäuseteilseitigen Befestigungselemente 220 angeordnet sind, versetzt zu einer Dichtungsabschnitts-Mittelachse 280 des Dichtungsabschnitts 214 der Öffnung 210 des Filtergehäuseteils 200 angeordnet sein, da die Anordnung der gehäuseteilseitigen Befestigungselemente 220 unabhängig von einem Kragen des in den Innenraum ragenden Dichtungsabschnitts 214 ist.

Wie aus Figuren 6 bis 9 weiter ersichtlich ist, sind die hakenförmigen Befestigungselemente 220, 320 unterschiedlich ausgerichtet. In einem alternativen nicht dargestellten Ausführungsbeispiel können die Hakenspitzen jeweils radial von außen nach innen oder von innen nach außen oder axial in die gleiche Richtung weisen. Im dargestellten Ausführungsbeispiel weisen die Hakenspitzen der gehäuseteilseitigen Befestigungselemente 220 von innen nach außen, die Hakenspitzen der filterelementseitigen Befestigungselemente 320 weisen von außen nach innen.

Wie aus Figuren 7 bis 9 weiter ersichtlich ist, sind Führungselemente 330 des Filterelements 300 als Nut ausgeführt, welche in von einem Rand der Endscheibe 340 radial nach außen abstehende Elemente eingebracht ist.

Wie aus Figuren 6, 8 und 9 weiter ersichtlich ist, sind die Führungselemente 230 des Filtergehäuseteils 200 als von einer Gehäusewand radial nach innen abstehende und in Längsrichtung X verlaufende Führungsschienen ausgebildet.

Es sind auch andere Führungselemente 230, 330 vorstellbar. Zudem können verschiedenen Anordnungen der Befestigungselemente 220, 320 mit verschiedenen Ausführungen der Führungselemente 230, 330 kombiniert werden.

Wie aus Figur 10 und 11 weiter ersichtlich ist, sind die Führungselemente 330 des Filterelements 300 des fünften Ausführungsbeispiels des Filtersystems 10 als von einem Rand der Endscheibe 340 radial nach außen abstehende Ausbuchtungen ausgebildet. Diese Führungselemente 330 werden von den Führungselementen 230 des Filtergehäuseteils 200 geführt. Hierbei sind die Führungselemente 230 des Filtergehäuseteils 200 als Ausnehmung ausgeführt, in welcher ein korrespondierendes als Ausbuchtung ausgeführtes Führungselement 330 des Filterelements 300 geführt ist. Im Unterschied zu dem in Figur 5 dargestellten Ausführungsbeispiel ist die Ausnehmung nicht in die Gehäusewand eingestanzt, sondern innen ausgeformt oder wird durch ein zusätzliches in den Innenraum eingelegtes Bauteil realisiert. Das Filtergehäuseteil 200 weist mehrere solcher Führungselemente 230 auf.

Die Befestigungselement-Mittelachsen 222, 322, um welche die Befestigungselemente 220, 320 der Befestigungsanordnung 20 angeordnet sind, sind deckungleich zur Dichtungsabschnitts-Mittelachse 280 des Dichtungsabschnitts 214 der Öffnung 210 des Filtergehäuseteils 200 angeordnet.

Wie aus Figur 11 weiter ersichtlich ist, sind die Befestigungselement-Mittelachsen 222, 322, um welche die Befestigungselemente 220, 320 angeordnet sind, zudem deckungsgleich zur Öffnungs-Mittelachse 312 der Öffnung 310 des Filterelements 300 angeordnet.

Wie aus Figur 11 weiter ersichtlich ist, sind die Befestigungselement-Mittelachsen 222, 322, um welche die Befestigungselemente 220, 320 angeordnet sind, versetzt zur Verbindungsabschnitts-Mittelachse 260 des Verbindungsabschnitts 212 und versetzt zur Mittelrohr-Mittelachse 362 des Mittelrohrs 360 angeordnet.

Das in Figur 12 dargestellte sechste Ausführungsbeispiel des Filtersystems 10 und das in den Figuren 13 und 14 dargestellte siebte Ausführungsbeispiel des Filtersystems 10 unterscheiden sich von dem in den Figuren 10 und 11 dargestellten fünften Ausführungsbeispiel des Filtersystems 10 lediglich durch die Ausführung der Führungselemente 230, 330 am Filtergehäuseteil 200 und am Filterelement 300.

In Figur 12 ist das Führungselement 230 als konische Axialkante ausgeführt, auf welcher ein als Ausbuchtung ausgeführtes Führungselement 330 des Filterelements 300 geführt ist.

In Figur 13 und 14 weist das Filtergehäuseteil 200 ein großes nach innen abstehendes Führungselement 230 auf, welches in einer Nut in der Endscheibe 340 geführt ist. Hierbei weist ein als Faltenbalg ausgebildetes Filtermedium 350 im Bereich der Nut einen größeren Faltenabstand auf.

In den dargestellten Ausführungsbeispielen sind die filterelementseitigen Befestigungselemente 320 und die gehäuseteilseitigen Befestigungselemente 220 regelmäßig um die entsprechende Befestigungselement-Mittelachse 222, 322 mit gleichem Bogenmaß und Gradmaß zueinander beabstandet. In einem alternativen Ausführungsbeispiel können filterelementseitigen Befestigungselemente 320 und die gehäuseteilseitigen Befestigungselemente 220 auch unregelmäßig um die entsprechende Befestigungselement-Mittelachse 222, 322 angeordnet sein.

Die Befestigungsanordnung 20 kann das Filterelement 300 sowohl an einem als Filtertopf ausgeführten Filtergehäuseteil 200 als auch an einem, als Endkappe ausgeführten Filtergehäuseteil 200 fixieren. Das Filterelement 300 kann bei einer Fixierung an einer Endkappe einfach zusammen mit der Endkappe vom Filtertopf abgehoben und vom Filtertopf entfernt werden.

Bei einer nicht näher dargestellten Verwendung eines Filterelements 300 in einem Filtersystem 10, wird das Filterelement 300 in einen Innenraum eines Filtergehäuseteils 200 eingeführt und so zu dem Filtergehäuseteil 200 ausgerichtet, dass die Befestigungselement-Mittelachse 322 des Filterelements 300, um welche wenigstens zwei filterelementseitige Befestigungselemente 320 konzentrisch angeordnet sind, deckungsgleich zu einer Befestigungselement-Mittelachse 222 des Filtergehäuseteils 200 angeordnet ist, um welche die wenigstens zwei gehäuseteilseitigen Befestigungselemente 320 konzentrisch angeordnet sind. Die wenigstens zwei filterelementseitigen Befestigungselemente 320 werden so zu den wenigstens zwei gehäuseteilseitigen Befestigungselementen 220 ausgerichtet, dass die Befestigungselemente 220, 320 eine Befestigungsanordnung 20 zur lösbaren Befestigung des Filterelements 300 am Filtergehäuseteil 200 ausbilden.

### Bezugszeichenliste

- 10: Filtersystem
- 12: Dichtungsanordnung
- 20: Befestigungsanordnung
- 100: Verschlusselement
- 120: Verbindungssegment
- 122: Verbindungselement
- 124: Kopplungselement zu 140
- 140: Verschlusssegment
- 142: Dichtungsbereich
- 144: erster Abschnitt
- 145: zweiter Abschnitt
- 146: dritter Abschnitt
- 147: Kopplungselement zu 120
- 150: Dichtungselement
- 200: Filtergehäuseteil
- 210: Öffnung
- 212: Verbindungsabschnitt
- 213: Verbindungselement
- 214: Dichtungsabschnitt
- 215: Dichtungsbereich
- 220: Befestigungselement
- 222: Befestigungselement-Mittelachse
- 230: Führungselement
- 260: Verbindungsabschnitts-Mittelachse
- 280: Dichtungsabschnitts-Mittelachse
- 300: Filterelement
- 310: Öffnung
- 312: Öffnungs-Mittelachse
- 313: Dichtungsabschnitt
- 314: Dichtbereich Ablassöffnung
- 320: Befestigungselement
- 322: Mittelachse Befestigungselemente
- 330: Führungselement
- 340: Endscheibe
- 342: Endscheiben-Mittelachse
- 350: Filtermedium
- 352: Faltenbalg-Mittelachse
- 360: Mittelrohr
- 362: Mittelrohr-Mittelachse
- X: Längsrichtung
- v: Achsenversatz

## Patentansprüche

1. Filterelement (300) für ein Filtersystem (10), mit einem Filtermedium (350) und wenigstens einer Endscheibe (340), wobei an der Endscheibe (340) wenigstens zwei filterelementseitige Befestigungselemente (320) angeordnet sind, welche konzentrisch um dieselbe in Längsrichtung (X) verlaufende Befestigungselement-Mittelachse (322) des Filterelements (300) angeordnet sind, **dadurch gekennzeichnet, dass** die Befestigungselement-Mittelachse (322) des Filterelements (300) radial versetzt zu wenigstens einer weiteren Mittelachse (312, 342, 352, 362) ist, nämlich
- versetzt zu wenigstens einer in Längsrichtung (X) verlaufenden Filterelement-Mittelachse (312, 342, 352, 362) des Filterelements (300),
- wobei die wenigstens zwei Befestigungselemente (320) einen unterschiedlichen radialen Abstand zu der wenigstens einen weiteren Mittelachse (312, 342, 352, 362) aufweisen, zu welcher die Befestigungselement-Mittelachse (322) des Filterelements (300), um welche die Befestigungselemente (320) konzentrisch angeordnet sind, versetzt ist.

2. Filterelement nach Anspruch 1, wobei das Filtermedium (350) zu einem insbesondere sternförmigen Faltenbalg plissiert ist, insbesondere wobei die weitere Mittelachse (312, 342, 352, 362), zu der die Befestigungselement-Mittelachse (322) des Filterelements (300) radial versetzt ist, eine Faltenbalg-Mittelachse (352) des Faltenbalgs ist.

3. Filterelement nach Anspruch 1 oder 2, wobei wenigstens eine Endscheibe (340) eine Öffnung (310) mit wenigstens einer in Längsrichtung (X) verlaufenden Öffnungs-Mittelachse (312) aufweist, insbesondere wobei die weitere Mittelachse (312, 342, 352, 362), zu der die Befestigungselement-Mittelachse (322) des Filterelements (300) radial versetzt ist, die Öffnungs-Mittelachse (312) der Öffnung (310) ist.

4. Filterelement nach einem der vorhergehenden Ansprüche, wobei wenigstens zwei der filterelementseitigen Befestigungselemente (320) voneinander mit gleichem Bogenmaß oder Gradmaß beabstandet sind und/oder wenigstens zwei der wenigstens zwei filterelementseitigen Befestigungselemente (320) voneinander mit ungleichem Bogenmaß oder Gradmaß beabstandet und/oder wenigstens zwei der filterelementseitigen Befestigungselemente (320) achsensymmetrisch zur Befestigungselement-Mittelachse (322) des Filterelements (300) und/oder wenigstens zwei der filterelementseitigen Befestigungselemente (320) rotationssymmetrisch zur Befestigungselement-Mittelachse (322) des Filterelements (300) angeordnet sind.

5. Filterelement nach einem der vorhergehenden Ansprüche, wobei die wenigstens zwei Befestigungselemente (320) hakenförmig ausgebildet sind.

6. Filterelement nach Anspruch 5, wobei das hakenförmige Befestigungselement (320) einen Hakenschenkel mit rechteckigem oder trapezförmigem Querschnitt aufweist, welcher sich zu einem Kopplungsbereich hin verjüngt, wobei der Kopplungsbereich auf einer Unterseite eine Anlagefläche aufweist, welche von dem Hakenschenkel absteht und wobei der Kopplungsbereich an einer Oberseite schräg verlaufende Führungsflächen aufweist.

7. Filterelement nach einem der vorhergehenden Ansprüche, wobei das Filterelement ein Mittelrohr (360) aufweist, welches von dem Filtermedium (350) umgeben ist, wobei die weitere Mittelachse (312, 342, 352, 362), zu der die Befestigungselement-Mittelachse (322) des Filterelements (300) radial versetzt ist, insbesondere eine Mittelrohr-Mittelachse (362) des Mittelrohrs (360) ist.

8. Filtergehäuseteil (200) für ein Filtersystem (10), mit einem Innenraum, welcher dazu ausgelegt ist, ein Filterelement (300) nach einem der vorhergehenden Ansprüche, zumindest teilweise aufzunehmen, einer mit dem Innenraum gekoppelten Öffnung (210) mit wenigstens einer in Längsrichtung (X) verlaufenden Öffnungs-Mittelachse (260, 280), und wenigstens zwei gehäuseteilseitigen Befestigungselementen (220), welche konzentrisch um dieselbe in Längsrichtung (X) verlaufende Befestigungselement-Mittelachse (222) des Filtergehäuseteils (200) angeordnet sind, wobei die Befestigungselement-Mittelachse (222) des Filtergehäuseteils (200) radial versetzt zu wenigstens einer weiteren in Längsrichtung (X) verlaufenden Mittelachse (260, 280) ist, nämlich
- versetzt zu einer Filtergehäuseteil-Mittelachse (260, 280) des Filtergehäuseteils (200)
wobei die wenigstens zwei gehäuseteilseitigen Befestigungselemente (220) einen unterschiedlichen radialen Abstand zu der wenigstens einen weiteren Mittelachse (260, 280) aufweisen, zu welcher die Befestigungselement-Mittelachse (222) des Filtergehäuseteils (200), um welche die gehäuseteilseitigen Befestigungselemente (220) angeordnet sind, versetzt ist, sodass die Befestigungselement-Mittelachse (322) des Filterelements (300)im Verwendungszustand deckungsgleich zur Befestigungselement-Mittelachse (222) des Filtergehäuseteils (200) anordenbar ist, so dass die gehäuseteilseitigen Befestigungselemente (220) mit den filterelementseitigen Befestigungselementen (320) in Eingriff bringbar sind.

9. Filtergehäuseteil nach Anspruch 8, wobei wenigstens zwei der gehäuseteilseitigen Befestigungselemente (220) unterschiedliche radiale Abstände zur Befestigungselement-Mittelachse (222) des Filtergehäuseteils (200) aufweisen.

10. Filtergehäuseteil nach Anspruch 8 oder 9, wobei wenigstens zwei der gehäuseteilseitigen Befestigungselemente (220) mit gleichem radialem Abstand zur Befestigungselement-Mittelachse (222) des Filtergehäuseteils (200) angeordnet sind und/oder wenigstens zwei der gehäuseteilseitigen Befestigungselemente (220) voneinander mit gleichem Bogenmaß oder Gradmaß beabstandet sind, und/oder wenigstens zwei der Befestigungselemente (220) voneinander mit unterschiedlichem Bogenmaß oder Gradmaß beabstandet sind, und/oder wenigstens zwei der gehäuseteilseitigen Befestigungselemente (220) achsensymmetrisch und/oder wenigstens zwei der gehäuseteilseitigen Befestigungselemente (220) rotationssymmetrisch zur Befestigungselement-Mittelachse (222) des Filtergehäuseteils (200) angeordnet sind.

11. Filtergehäuseteil nach einem der Ansprüche 8 bis 10, wobei die wenigstens zwei gehäuseteilseitigen Befestigungselemente (220) hakenförmig oder als Kante mit einer Angriffsfläche ausgebildet sind.

12. Filtergehäuseteil nach Anspruche 11, wobei das hakenförmige Befestigungselement (220) einen Hakenschenkel mit rechteckigem oder trapezförmigem Querschnitt aufweist, welcher sich zu einem Kopplungsbereich hin verjüngt, wobei der Kopplungsbereich auf einer Unterseite eine Anlagefläche aufweist, welche von dem Hakenschenkel absteht und wobei der Kopplungsbereich an einer Oberseite schräg verlaufende Führungsflächen aufweist, wobei die Anlageflächen der gehäuseteilseitigen, hakenförmigen Befestigungselemente (220) im Verwendungszustand an Anlageflächen der filterelementseitigen Befestigungselemente (320) des Filterelements (300) anliegen, und wobei die Kante mit der Angriffsfläche so in den Innenraum des Filtergehäuseteils (200) ragt, dass Anlageflächen der filterelementseitigen Befestigungselemente (320) an der Angriffsfläche anliegen.

13. Filtersystem (10) mit einem Filtergehäuseteil (200) nach einem der Ansprüche 8 bis 12 wobei im Innenraum des Filtergehäuseteils (200) in einem Verwendungszustand ein Filterelement (300) nach einem der Ansprüche 1 bis 7 angeordnet ist, wobei das Filterelement (300) in einem Verwendungszustand lösbar über eine Befestigungsanordnung (20) am Filtergehäuseteil (200) befestigt ist, welche die wenigstens zwei filterelementseitigen Befestigungselemente (320) und mit diesen zusammenwirkende wenigstens zwei gehäuseteilseitige Befestigungselemente (220) aufweist, wobei in dem Verwendungszustand die Befestigungselement-Mittelachsen (222, 322) des Filterelements (300) und des Filtergehäuseteils (200), um welche die korrespondierenden Befestigungselemente (220, 320) angeordnet sind, deckungsgleich zu einander angeordnet sind, so dass die gehäuseteilseitigen Befestigungselemente (220) mit den filterelementseitigen Befestigungselementen (320) in Eingriff bringbar sind.

14. Filtersystem nach Anspruch 13, wobei eine Gehäusewand des Filtergehäuseteils (200) Führungselemente (230) umfasst, welche Führungselemente (330) des Filterelements (300) führen, insbesondere wobei die Führungselemente (230) des Filtergehäuseteils (200) und die Führungselemente (330) des Filterelements (300) zur Definition einer eindeutigen Winkelpositionierung des Filterelements (300) gegenüber dem Filtergehäuseteil (200), an welchem das Filterelement (300) in einem Verwendungszustand anordenbar ist, ausgebildet sind, wobei durch die Führung des Filterelements (300) am Filterelement (300) angeordnete Befestigungselemente (320) und am Filtergehäuseteil (200) angeordnete Befestigungselemente (220) in einem Verwendungszustand zusammen geführt sind.

15. Verwendung eines Filterelements (300) in einem Filtersystem (10) nach Anspruch 13 oder 14, wobei das Filterelement (300) in einen Innenraum eines Filtergehäuseteils (200) eingeführt wird und so zu dem Filtergehäuseteil (200) ausgerichtet wird, dass die Befestigungselement-Mittelachse (322) des Filterelements (300), um welche wenigstens zwei filterelementseitige Befestigungselemente (320) konzentrisch angeordnet sind, deckungsgleich zu einer Befestigungselement-Mittelachse (222) des Filtergehäuseteils (200) angeordnet ist, um welche die wenigstens zwei gehäuseteilseitigen Befestigungselemente (220) konzentrisch angeordnet sind, wobei die wenigstens zwei filterelementseitigen Befestigungselemente (320) so zu den wenigstens zwei gehäuseteilseitigen Befestigungselementen (220) ausgerichtet werden, dass die Befestigungselemente (220, 320) eine Befestigungsanordnung (20) zur lösbaren Befestigung des Filterelements (300) am Filtergehäuseteil (200), ausbilden.

## Claims

1. A filter element (300) for a filter system (10), with a filter medium (350) and at least one end disc (340), wherein at least two fastening elements (320) on the filter element side are disposed on the end disc (340), said fastening elements being disposed concentrically around the same fastening element center axis (322) in the longitudinal direction (X) of the filter element (300), **characterized in that** the fastening element center axis (322) of the filter element (300) is radially offset from at least one further center axis (312, 342, 352, 362), namely
- offset from at least one filter element center axis (312, 342, 352, 362) of the filter element (300) extending in the longitudinal direction (X),
- wherein the at least two fastening elements (320) feature a different radial distance from the at least one further center axis (312, 342, 352, 362) to which the fastening element center axis (322) of the filter element (300), about which the fastening elements (320) are disposed concentrically, is offset.

2. The filter element according to claim 1, wherein the filter medium (350) is pleated into a particularly star-shaped filter bellows, in particular wherein the further center axis (312, 342, 352, 362), to which the fastening element center axis (322) of the filter element (300) is radially offset, is a filter bellows center axis (352) of the filter bellows.

3. The filter element according to claim 1 or 2, wherein at least one end disc (340) features an opening (310) with at least one opening center axis (312) extending in the longitudinal direction (X), in particular wherein the further center axis (312, 342, 352, 362), to which the fastening element center axis (322) of the filter element (300) is radially offset, is the opening center axis (312) of the opening (310).

4. The filter element according to one of the preceding claims, wherein at least two of the fastening elements (320) on the filter element side are spaced apart from each other by the same radian measure or degree measure and/or at least two of the at least two fastening elements (320) on the filter element side are spaced apart from each other by unequal radian measure or degree measure and/or at least two of the fastening elements (320) on the filter element side are disposed axis-symmetrically with respect to the fastening element center axis (322) of the filter element (300)
and/or at least two of the fastening elements (320) on the filter element side are disposed rotationally symmetrically with respect to the fastening element center axis (322) of the filter element (300).

5. The filter element according to one of the preceding claims, wherein the at least two fastening elements (320) are realized hook-shaped.

6. The filter element according to claim 5, wherein the hook-shaped fastening element (320) features a hook leg with a rectangular or trapezoidal cross-section which tapers towards a coupling area, wherein the coupling area features a contact surface on a lower side which projects from the hook leg and wherein the coupling area features guiding surfaces running at an angle on an upper side.

7. The filter element according to one of the preceding claims, wherein the filter element features a center tube (360) surrounded by the filter medium (350), wherein the further center axis (312, 342, 352, 362), to which the fastening element center axis (322) of the filter element (300) is radially offset, is in particular a center tube-center axis (362) of the center tube (360).

8. A filter housing component (200) for a filter system (10), with an interior space designed to at least partially accommodate a filter element (300) according to one of the preceding claims, an opening (210) coupled to the interior space with at least one opening center axis (260, 280) extending in the longitudinal direction (X), and at least two fastening elements (220) on the housing component side disposed concentrically around the same fastening element center axis (222) of the filter housing component extending in the longitudinal direction (X) of the filter housing component (200), wherein the fastening element center axis (222) of the filter housing component (200) is radially offset from at least one further center axis (260, 280) extending in the longitudinal direction (X), namely
- offset from a filter housing component center axis (260, 280) of the filter housing component (200), wherein the at least two fastening elements (220) on the housing component side feature a different radial distance from the at least one further center axis (260, 280) from which the fastening element center axis (222) of the filter housing component (200), about which the fastening elements (220) on the housing component side are disposed, is offset, so that the fastening element center axis (322) of the filter element (300), when in use, is congruent with the fastening element center axis (222) of the filter housing component (200), so that the fastening elements (220) on the housing component side can be brought into engagement with fastening elements (320) on the filter element side.

9. The filter housing component according to claim 8, wherein at least two of the fastening elements (220) on the housing component side have different radial distances to the fastening element center axis (222) of the filter housing component (200).

10. The filter housing component according to claim 8 or 9, wherein at least two of the fastening elements (220) on the housing component side are disposed at the same radial distance from the fastening element center axis (222) of the filter housing component (200) and/or at least two of the fastening elements (220) on the housing component side are spaced apart from each other by the same radian measure or degree measure, and/or at least two of the fastening elements (220) are spaced apart from each other by a different radian measure or degree measure, and/or at least two of the fastening elements (220) on the housing component side are disposed axially symmetrically and/or at least two of the fastening elements (220) on the housing component side are disposed rotationally symmetrically with respect to the fastening element center axis (222) of the filter housing component (200).

11. The filter housing component according to one of the claims 8 to 10, wherein the at least two fastening elements (220) on the housing component side are hook-shaped or designed as an edge with an engagement surface.

12. The filter housing component according to claim 11, wherein the hook-shaped fastening element (220) features a hook leg with a rectangular or trapezoidal cross-section, which tapers toward a coupling area, wherein the coupling area features a contact surface on a lower side which projects from the hook leg and wherein the coupling area features guiding surfaces extending obliquely on an upper side, wherein the contact surfaces of the hook-shaped fastening elements (220) on the housing component side are in contact with contact surfaces of the fastening elements (320) on the filter element side of the filter element (300) when in use, and wherein the edge with the engagement surface projects into the interior space of the filter housing component (200) such that contact surfaces of the fastening elements (320) on the filter element side abut against the engagement surface.

13. A filter system (10) with a filter housing component (200) according to one of the claims 8 to 12, wherein a filter element (300) according to one of the claims 1 to 7 is disposed in the interior space of the filter housing component (200) when in use, wherein the filter element (300) is releasably fastened, when in use, to the filter housing component (200) via a fastening arrangement (20) featuring the at least two fastening elements (320) on the filter element side and at least two fastening elements (220) on the housing component side cooperating therewith, wherein, when in use, the fastening element center axes (222, 322) of the filter element (300) and of the filter housing component (200), around which the corresponding fastening elements (220, 320) are disposed, are congruent with one another, so that the fastening elements (220) on the housing component side can be brought into engagement with the fastening elements (320) on the filter element side.

14. The filter system according to claim 13, wherein a housing wall of the filter housing component (200) comprises guide elements (230) guiding guide elements (330) of the filter element (300), in particular wherein the guide elements (230) of the filter housing component (200) and the guide elements (330) of the filter element (300) are designed to define an unequivocal angular position of the filter element (300) relative to the filter housing component (200) on which the filter element (300) can be disposed when in use, wherein, by guiding the filter element (300), fastening elements (320) disposed on the filter element (300) and fastening elements (220) disposed on the filter housing component (200) are brought together when in use.

15. A use of a filter element (300) in a filter system (10) according to claim 13 or 14, wherein the filter element (300) is inserted into an interior space of a filter housing component (200) and is aligned with respect to the filter housing component (200) such that the fastening element center axis (322) of the filter element (300), around which at least two fastening elements (320) on the filter element side are concentrically disposed, is congruent with a fastening element center axis (222) of the filter housing component (200) around which the at least two fastening elements (220) on the housing component side are concentrically disposed, wherein the at least two fastening elements (320) on the filter element side are aligned with respect to the at least two fastening elements (220) on the housing component side such that the fastening elements (220, 320) form a fastening arrangement (20) for releasably fastening the filter element (300) to the filter housing component (200).

## Revendications

1. Élément filtrant (300) pour un système de filtre (10), avec un milieu filtrant (350) et au moins un disque d'extrémité (340), au moins deux éléments de fixation (320) côté élément filtrant étant disposés sur le disque d'extrémité (340), lesquels sont disposés de manière concentrique autour de l'axe central (322) de l'élément de fixation de l'élément filtrant (300) s'étendant dans le sens longitudinal (X) de celui-ci, **caractérisé en ce que** l'axe central (322) de l'élément de fixation de l'élément filtrant (300) est décalé radialement par rapport à au moins un autre axe central (312, 342, 352, 362), à savoir
- décalé par rapport à un axe central (312, 342, 352, 362), au moins au nombre d'un, de l'élément filtrant (300) s'étendant dans le sens longitudinal (X),
- l'élément de fixation (320), au moins au nombre de deux, présentant une distance radiale différente par rapport à l'autre axe central (312, 342, 352, 362), au moins au nombre d'un, par rapport auquel l'axe central (322) de l'élément de fixation de l'élément filtrant (300), autour duquel les éléments de fixation (320) sont disposés de manière concentrique, est décalé.

2. Élément filtrant selon la revendication 1, le milieu filtrant (350) étant plissé en un soufflet de filtre notamment en forme d'étoile, notamment l'autre axe central (312, 342, 352, 362), par rapport auquel l'axe central (322) de l'élément de fixation de l'élément filtrant (300) est décalé radialement, étant un axe central (352) du soufflet de filtre.

3. Élément filtrant selon la revendication 1 ou 2, au moins un disque d'extrémité (340) présentant une ouverture (310) avec au moins un axe central d'ouverture (312) s'étendant dans le sens longitudinal (X), notamment l'autre axe central (312, 342, 352, 362), par rapport auquel l'axe central (322) de l'élément de fixation de l'élément filtrant (300) est décalé radialement, étant l'axe central (312) de l'ouverture (310).

4. Élément filtrant selon l'une quelconque des revendications précédentes, au moins deux des éléments de fixation (320) côté élément filtrant étant espacés l'un de l'autre d'un radian ou d'un degré identique et/ou des éléments de fixation (320), au moins au nombre de deux, côté élément filtrant étant espacés l'un de l'autre d'un radian ou d'un degré inégale et/ou au moins deux des éléments de fixation (320) côté élément filtrant étant symétriques par rapport à l'axe central (322) de l'élément de fixation de l'élément filtrant (300)
et/ou au moins deux des éléments de fixation (320) côté élément filtrant étant disposés de manière à symétrie de révolution par rapport à l'axe central (322) de l'élément de fixation de l'élément filtrant (300).

5. Élément filtrant selon l'une quelconque des revendications précédentes, les éléments de fixation (320), au moins au nombre de deux, étant conçus en forme de crochet.

6. Élément filtrant selon la revendication 5, l'élément de fixation (320) en forme de crochet présentant une branche de crochet de section rectangulaire ou trapézoïdale qui se rétrécit vers une zone d'accouplement, la zone d'accouplement présentant sur une face inférieure une surface de contact faisant saillie par rapport à la branche de crochet et la zone d'accouplement présentant sur une face supérieure des surfaces de guidage inclinées.

7. Élément filtrant selon l'une quelconque des revendications précédentes, l'élément filtrant présentant un tube central (360) entouré du milieu filtrant (350), l'autre axe central (312, 342, 352, 362), par rapport auquel l'axe central (322) de l'élément de fixation de l'élément filtrant (300) est décalé radialement, étant notamment un axe central (362) du tube central (360).

8. Partie de boîtier de filtre (200) pour un système de filtre (10), avec un espace intérieur conçu pour recevoir au moins partiellement un élément de filtre (300) selon l'une quelconque des revendications précédentes, une ouverture (210) couplée à l'espace intérieur avec au moins un axe central d'ouverture (260, 280) s'étendant dans le sens longitudinal (X) s'étendant dans la direction longitudinale (X), et au moins deux éléments de fixation (220) côté partie de boîtier disposés de manière concentrique autour du même axe central (222) de l'élément de fixation de la partie de boîtier de filtre (200) s'étendant dans le sens longitudinal (X), l'axe central (222) de l'élément de fixation de la partie de boîtier de filtre (200) étant décalé radialement par rapport à au moins un autre axe central (260, 280) s'étendant dans le sens longitudinal (X), à savoir
- décalé par rapport à un axe central (260, 280) de la partie de boîtier de filtre (200), les éléments de fixation (220), au moins au nombre de deux, côté partie de boîtier présentant une distance radiale différente par rapport à l'autre axe central (260, 280), au moins au nombre d'un, par rapport auquel l'axe central (222) de l'élément de fixation de la partie de boîtier de filtre (200), autour duquel sont disposés les éléments de fixation (220) côté partie de boîtier, est décalé de telle sorte que l'axe central (322) de l'élément de fixation de l'élément filtrant (300), à l'état d'utilisation, peut être disposé de manière à coïncider avec l'axe central (222) de l'élément de fixation de la partie de boîtier de filtre (200) de sorte que les éléments de fixation (220) côté partie de boîtier peuvent être mis en prise avec les éléments de fixation (320) côté élément filtrant.

9. Partie de boîtier de filtre selon la revendication 8, au moins deux des éléments de fixation (220) côté partie de boîtier présentant des distances radiales différentes par rapport à l'axe central (222) de l'élément de fixation de la partie de boîtier de filtre (200).

10. Partie de boîtier de filtre selon la revendication 8 ou 9, dans laquelle au moins deux des éléments de fixation (220) côté partie de boîtier étant disposés à la même distance radiale par rapport à l'axe central (222) des éléments de fixation (200) côté partie de boîtier de filtre et/ou au moins deux des éléments de fixation (220) côté partie de boîtier étant espacés l'un de l'autre d'un radian ou d'un degré identique, et/ou au moins deux des éléments de fixation (220) étant espacés l'un de l'autre d'un angle ou d'un degré différent, et/ou au moins deux des éléments de fixation (220) côté partie de boîtier étant disposés de manière symétrique par rapport à l'axe et/ou au moins deux des éléments de fixation (220) côté partie du boîtier sont disposés de manière symétrique en rotation par rapport à l'axe central (222) des éléments de fixation de la partie de boîtier de filtre (200).

11. Partie de boîtier de filtre selon l'une quelconque des revendications 8 à 10, les éléments de fixation (220), au moins au nombre de deux, côté partie de boîtier étant réalisés en forme de crochet ou de bord avec une surface d'attaque.

12. Partie de boîtier de filtre selon la revendication 11, l'élément de fixation en forme de crochet (220) présentant une branche de crochet de section rectangulaire ou trapézoïdale qui se rétrécit vers une zone d'accouplement, la zone d'accouplement présentant sur une face inférieure une surface de contact faisant saillie par rapport à la branche de crochet et la zone d'accouplement présentant sur une face supérieure des surfaces de guidage inclinées, les surfaces de contact des éléments de fixation (220) côté partie de boîtier en forme de crochet situés sur le côté du boîtier s'appuient, à l'état d'utilisation, contre des surfaces de contact des éléments de fixation (320) côté élément filtrant de l'élément filtrant (300), et l'arête avec la surface d'attaque faisant saillie dans l'espace intérieur de la partie de boîtier de filtre (200) de telle sorte que les surfaces de contact des éléments de fixation (320) côté élément filtrant s'appuient sur la surface d'attaque.

13. Système de filtre (10) avec une partie de boîtier de filtre (200) selon l'une quelconque des revendications 8 à 12, un élément filtrant (300) selon l'une quelconque des revendications 1 à 7 étant disposé dans l'espace intérieur de la partie de boîtier de filtre (200) à l'état d'utilisation, l'élément filtrant (300) étant fixé de manière amovible, à l'état d'utilisation, à la partie de boîtier de filtre (200) par l'intermédiaire d'un agencement de fixation (20) présentant les éléments de fixation (320), au moins au nombre de deux, côté élément filtrant et les éléments de fixation (220), au moins au nombre de deux, côté partie de boîtier qui coopèrent avec ceux-ci, dans l'état d'utilisation, les axes centraux (222, 322) des éléments de fixation de l'élément filtrant (300) et de la partie de boîtier du filtre (200) autour desquels étant disposés les éléments de fixation correspondants (220, 320) de manière coïncidente, de sorte que les éléments de fixation (220) côté partie de boîtier peuvent être mis en prise avec les éléments de fixation côté élément filtrant (320).

14. Système de filtre selon la revendication 13, une paroi du boîtier de la partie de boîtier du filtre (200) comprenant des éléments de guidage (230) qui guident les éléments de guidage (330) de l'élément filtrant (300), notamment les éléments de guidage (230) de la partie de boîtier de filtre (200) et les éléments de guidage (330) de l'élément de filtre (300) étant conçus pour définir un positionnement angulaire univoque de l'élément de filtre (300) par rapport à la partie de boîtier de filtre (200) sur lequel l'élément filtrant (300) peut être disposé dans un état d'utilisation, grâce au guidage de l'élément filtrant (300), des éléments de fixation (320) disposés sur l'élément filtrant (300) et des éléments de fixation (220) disposés sur la partie de boîtier de filtre (200) étant assemblés dans un état d'utilisation.

15. Utilisation d'un élément filtrant (300) dans un système de filtre (10) selon la revendication 13 ou 14, l'élément filtrant (300) étant introduit dans un espace intérieur d'une partie de boîtier de filtre (200) et étant orienté par rapport à la partie de boîtier de filtre (200) de telle sorte que l'axe central (322) de l'élément de fixation de l'élément filtrant (300), autour duquel sont disposés de manière concentrique au moins deux éléments de fixation (320) côté élément filtrant, coïncide avec un axe central (222) de l'élément de fixation de la partie de boîtier de filtre (200) autour duquel les éléments de fixation (220), au moins au nombre de deux, côté partie de boîtier sont disposés de manière concentrique, les éléments de fixation (320), au moins au nombre de deux, côté élément filtrant étant alignés par rapport aux éléments de fixation (220), au moins au nombre de deux, côté partie de boîtier de telle sorte que les éléments de fixation (220, 320) forment un agencement de fixation (20) pour la fixation amovible de l'élément filtrant (300) sur la partie de boîtier de filtre (200).
